# EUROPEAN PATENT APPLICATION

(11) **EP 2 256 548 A1**
(43) Date of publication of application: **01.12.2010**
(21) Application number: 09722369.7
(22) Date of filing: 12.03.2009
(51) Int. Cl.: G03B 21/16, G02F 1/13, G02F 1/1333, H04N 5/74

(54) **PROJECTOR**

(30) Priority: 17.03.2008 JP 2008067402; 21.03.2008 JP 2008073462; 27.03.2008 JP 2008084799; 03.03.2009 JP 2009049511
(71) Applicant: SANYO Electric Co., Ltd., Moriguchi-shi Osaka 560-8677 (JP)
(72) Inventor: TSUCHIYA, Masaki, Moriguchi-shi Osaka 570-8677 (JP); TSUIHIJI, Ryosuke, Moriguchi-shi Osaka 570-8677 (JP); ARAI, Kazuhiro, Moriguchi-shi Osaka 570-8677 (JP); ITSUKI, Hiroyuki, Moriguchi-shi Osaka 570-8677 (JP); IMAI, Satoshi, Moriguchi-shi Osaka 570-8677 (JP); MAEDA, Makoto, Moriguchi-shi Osaka 570-8677 (JP); MASHITANI, Ken, Moriguchi-shi Osaka 570-8677 (JP); IINUMA, Toshiya, Moriguchi-shi Osaka 570-8677 (JP)
(74) Representative: Glawe, Delfs, Moll
(86) International application number: PCT/JP2009/001105
(87) International publication number: WO 2009/116252

(57) **Abstract**

There is disclosed a projector which supplies air cooled by a cooling unit to an optical element group, whereby the occurrence of dew condensation is prevented. The projector includes a cooling apparatus 11 disposed in a main body 1 and functioning as the cooling unit; a sealed or substantially sealed duct 30 through which cold air cooled by a cooler 18 of the cooling apparatus 11 is circulated and supplied to an optical element group 5 to cool the optical element group; an outside air introduction port 32 and an air discharge port 33 which function as a ventilation unit for introducing outside air into this duct 30 to discharge the air from the duct 30, dampers 34 and 35 for opening and closing these ports; and a controller C functioning as a control unit for controlling the dampers 34 and 35 to execute a ventilating operation in the duct 30.

## Description

### Technical Field

The present invention relates to a projector comprising an optical element group which processes light emitted from a light source in accordance with an image signal and which emits the processed image light.

More particularly, the present invention relates to a projector including a light source, optical elements irradiated with light emitted from the light source and an optical projection system which projects the light emitted from the optical elements.

### Background Art

Heretofore, this type of projector, for example, a liquid crystal projector includes a light source, a liquid crystal panel (an optical element), projection lenses and the like in a main body. The liquid crystal panel is usually constituted of three liquid crystal panels as light bulbs to process (modulate) color beams in accordance with an image signal. Moreover, light emitted from the light source is split into the respective color beams, and the beams are then processed (modulated) in accordance with the image signal by the respective liquid crystal panels, and synthesized as a projection light image (the image light) through prisms and the like. Subsequently, the synthesized projection light image is enlarged and projected onto a screen by the projection lenses.

In such a projector, the light source and an optical element group (the liquid crystal panels and polarizing beam splitters (PBS)) become heat generation sources to bring the inside of the main body into a heated state. Therefore, a plurality of fans are installed in the main body, and air from the outside of the projector (the outside air) is supplied (blown) to the optical element group and the light source by the respective fans, thereby releasing the heat. In this case, the light source reaches a temperature which is as high as about +900°C, and this heat can sufficiently be released by the outside air. However, the upper limit of the use temperature of the optical element group is a comparatively low temperature. For example, when the liquid crystal panel is used as the optical element, the upper limit of the use temperature is from about +70°C to +80°C. Therefore, the amount of the heat which can be released from the optical element is noticeably influenced by the temperature of the outside air. That is, when the temperature of the outside air is low, the optical element can sufficiently release the heat to the supplied outside air. However, when the temperature of the outside air is high, it is necessary to release the desired heat amount by increasing the airflow of the fans or the like. This causes some problems. For example, noise increases owing to the operation of the fans, and power consumption remarkably increases.

Moreover, the outside air which has received the heat is discharged to the outside, but the problem of a so-called short cycle of the air after the heat release also occurs, where the discharged outside air is again sucked by the fans and supplied to the projector. In consequence, the effective heat release cannot be obtained.

To solve such a problem, it has been suggested that cooling means for producing the low-temperature air by electronic cooling is disposed in a main body of a projector and the low-temperature air produced by this cooling means is supplied to a liquid crystal panel (an optical element) to cool the optical element (e.g., see Patent Document 1).

Moreover, it has also been suggested that cooling means including a cooling apparatus provided with a refrigerant circuit constituted of a compressor, a radiator, a pressure reducing unit and a cooler (an evaporator) is disposed in a main body and cold air subjected to heat exchange between the air and the cooler is supplied to an optical element group to cool the optical element group (e.g., see Patent Document 2).

In addition, heretofore, there has been known a projection type image display apparatus including a light source, an optical element which modulates light emitted from the light source and an optical projection system which projects the light emitted from the optical element. Examples of the optical element include a transmission type liquid crystal panel, a reflection type liquid crystal panel and a digital micromirror device (DMD).

In the above projection type image display apparatus, the optical element is irradiated with the light emitted from the light source. That is, the optical element is heated by the light emitted from the light source.

Therefore, the projection type image display apparatus is usually provided with a cooling apparatus which cools a cooling target such as the optical element.
A cooling target such as the optical element is disposed along an optical path of the light emitted from the light source. Therefore, it is preferable to use an air cooling type cooling apparatus as the cooling apparatus so that the light emitted from the light source is not blocked. It is to be noted that it is not preferable to use a liquid cooling type cooling apparatus or the like.

For example, the air cooling type cooling apparatus includes a cooling section which cools the air flowing through an air duct (an air flow path). As the cooling section, for example, Peltier element is used. The optical element is disposed along the air flow path. The optical element is cooled by the air (the cooling air) flowing through the air flow path (e.g., Patent Document 1).

Moreover, heretofore, this type of projector, for example, a liquid crystal projector includes a light source, a liquid crystal panel (an optical element group), projection lenses and the like in a main body. The liquid crystal panel is usually constituted of three liquid crystal panels as light bulbs to process (modulate) light emitted from the light source in accordance with image information. Moreover, the light emitted from the light source is split into red (R), green (G) and blue (B) beams, and the beams are modulated by the respective liquid crystal panels to obtain the R, G and B beams corresponding to the image information. Afterward, the beams are synthesized as a projection light image through a prism and the like. Subsequently, the synthesized projection light image is enlarged and projected onto a screen by the projection lenses.

In such a liquid crystal projector, the light source or the optical element group (the liquid crystal panels, etc.) becomes a heat generation source to bring the inside of the main body into a heated state. Therefore, a plurality of fans are installed in the main body, and air from the outside of the liquid crystal projector (the outside air) is supplied (blown) to the optical element group and the light source by the respective fans, thereby releasing heat. In this case, the light source reaches a temperature which is as high as several hundred degrees (e.g., about +900°C), and hence the heat can sufficiently be released by the outside air. However, the upper limit of the use temperature of the optical element group is a comparatively low temperature. When, for example, the liquid crystal panels are used as the optical element group, the upper limit of the use temperature is from about +70°C to +80°C. Therefore, the amount of the heat which can be released from the optical element group is noticeably influenced by the temperature of the outside air. That is, when the temperature of the outside air is low, the optical element group can sufficiently release the heat to the supplied outside air. However, when the temperature of the outside air is high, it is necessary to release the desired heat amount by increasing the airflow of the fans or the like. This causes some problems. For example, noise increases owing to the operation of the fans, and power consumption remarkably increases.

Moreover, the outside air which has received the heat from the light source or the optical element group is discharged to the outside, and a part of the discharged outside air is again sucked by the fans and supplied to the liquid crystal projector. That is, a problem is also caused that a so-called short cycle of the air after the heat release occurs, and the effective heat release of the liquid crystal panels cannot favorably be obtained.

Furthermore, in recent years, a request for the enlargement or high luminance of a projection image has risen in the market of the liquid crystal projectors for business purposes or the like, and accordingly, the quantity of the light emitted from the light source increases, the quantity of the light guided to the optical element group also increases, and the amount of the heat generated by the optical element group also tends to increase. This causes a problem that it becomes difficult to release the heat while keeping the optical element group at a usual temperature or a lower temperature.

To solve such problems, it has also been suggested that the low-temperature air (the cold air) is produced by the electronic cooling to cool the liquid crystal panels (the optical element group) (e.g., see Patent Document 1).
Patent Document 1: Japanese Patent Application Laid-Open No. 2005-121250
Patent Document 2: Japanese Patent Application Laid-Open No. 7-152009

### Disclosure of the Invention

### Problem to be solved by the Invention

Meanwhile, such cooling means might cause a problem that the cooling means has a dew point or a lower temperature at which water is easily condensed, and the water is combined to form dew condensation water. This dew condensation water enters an optical element group, thereby causing damage to the optical element group or hindering the processing of the light emitted from a light source.
To solve this problem, an attempt has been made to hermetically seal the optical element group and the cooling means for cooling the optical element group or to arrange them in a member having a substantially hermetically sealed structure and install a desiccant in the member, thereby positively removing the water from air. However, the amount of the water which can be adsorbed by the desiccant necessarily has its tolerance. This causes a problem that when the amount of the water to be adsorbed by the desiccant increases, an adsorption performance deteriorates. It is not possible to solve a problem that dew condensation occurs or the generated dew condensation water enters the optical element group.

Moreover, usually in a case where a power source of a projection type image display apparatus is activated, a timing when a cooling section starts cooling the air flowing through an air flow path is the same as a timing when the light source starts emitting light.

Here, the cooling section needs to cool the air highly charged in the air flow path, and hence a time until the air flowing through the air flow path reaches a predetermined temperature (hereinafter referred to as the air cooling time) is longer than a time until the quantity of the light emitted from the light source reaches the predetermined quantity of the light (hereinafter referred to as the light quantity rising time).

As described above, the optical element is irradiated with the light emitted from the light source. Therefore, when the air cooling time is longer than the light quantity rising time, the temperature of the optical element might exceed the upper limit of the range of an operation temperature allowed for the optical element (hereinafter referred to as the allowable temperature range).

Furthermore, such electronic cooling can solve the problem of the heat release or noise, but the electronic cooling has a remarkably poor energy efficiency, and a heat generating section during the electronic cooling is integrally constituted. Therefore, means for releasing the heat by the outside air (a heat sink or a fan) becomes necessary near the cooling target, which causes a problem that a spatial restriction is generated to remarkably decrease the degree of freedom in design.

Moreover, to prevent the liquid crystal panel or the like from exceeding the use temperature, cold air having a temperature which is not higher than room temperature (not higher than the outside air temperature) may be produced by an apparatus for cooling other than the electronic cooling (e.g., the cooling apparatus using a compressor) to cool the liquid crystal panel. In this case, a duct for cooling the optical element group may be disposed to circulate the cold air through this duct. However, in a case where such cold air having the temperature not higher than the room temperature is produced to cool the liquid crystal panel, the temperature of the duct which comes in contact with the circulating cold air easily becomes the temperature which is not higher than the dew point, and hence the dew condensation occurs on the outer surface of the duct which comes in contact with the outside air (the air having the room temperature). In some cases, the dew condensation occurs on the inner surface as well.

The dew condensation on the inner surface of the duct can temporarily be suppressed by increasing the sealing degree of the duct, but after the use for a long period of time, the dew condensation water increases, and adversely influences the optical element group, another electronic part or the like. The dew condensation on the outer surface of the duct can be prevented by using a material having high insulation properties in a housing or the duct through which the cold air circulates as in reference documents. However, for example, when the temperature of the outside air is about +30°C, the temperature of the cold air is about +10°C and the heat conductivity of the insulating material is about 0.1 W/m•K, the thickness of the insulating material needs to be about 30 mm so that the temperature of the outer surface of the duct is not lower than the dew condensation point. This causes a problem that spatial design restrictions increase with the result that the enlargement of the liquid crystal projector cannot be avoided.

The present invention has been developed to solve such conventional technical problems, and an object thereof is to prevent the occurrence of dew condensation especially in a projector which supplies cold air cooled by cooling means to an optical element group.

Another object of the present invention is to provide a projector which can prevent the temperatures of optical elements from exceeding the upper limit of an allowable temperature range.

Still another object of the present invention is to prevent the enlargement of a liquid crystal projector and to provide a projector capable of effectively preventing the dew condensation of a duct through which cold air for cooling an optical element group is circulated.

### Means for solving the Problem

The projector of the present invention is provided with a light source disposed in a main body, and an optical element group which processes light emitted from this light source in accordance with an image signal to emit the image light, and is characterized by comprising cooling means disposed in the main body; a sealed or substantially sealed duct through which cold air cooled by this cooling means is circulated and supplied to the optical element group to cool the optical element group; ventilation means for introducing outside air into this duct to discharge the air from the duct; and control means for controlling this ventilation means to execute a ventilating operation in the duct.

The projector of the invention of a second aspect is **characterized in that** in the above invention, the ventilation means comprises an outside air introduction port and an air discharge port formed in the duct, and dampers which open and close the outside air introduction port and the air discharge port, respectively, the control means opens the outside air introduction port and the air discharge port by the dampers to execute the ventilating operation, and the cooling means is disposed in the duct between the outside air introduction port and the air discharge port.

The projector of the invention of a third aspect is **characterized in that** in the invention of the second aspect, when the dampers open the outside air introduction port and the air discharge port, the outside air introduction port and the air discharge port are isolated from the optical element group.

The projector of the invention of a fourth aspect is **characterized in that** in the invention of any one of the first to third aspects, the projector comprises a desiccant disposed in the duct; and a desiccant heating heater which heats this desiccant, and the control means allows the desiccant heating heater to generate heat, when the ventilation means executes the ventilating operation.

The projector of the invention of a fifth aspect is **characterized in that** in the invention of any one of the first to fourth aspects, when the cooling operation of the cooling means is stopped and the temperature of the cooling means rises above the dew point of the outside air, the control means executes the ventilating operation by the ventilation means.

A projector of the invention of a sixth aspect includes a light source (a light source 1010), optical elements irradiated with light emitted from the light source (a liquid crystal panel 1040, an entrance side polarization plate 1041 and an exit side polarization plate 1042) and an optical projection system which projects the light emitted from the optical elements (a projection lens unit 1160). A projection type image display apparatus comprises a cooling apparatus (a cooling apparatus 1300) including an air flow path which is the flow path of air (an air flow path 1310) and a cooling section (a heat absorber 1320) which cools the air flowing through the air flow path; and a light quantity control section which controls the quantity of the light with which the optical elements are irradiated (a light source control section 1220 or a limiting quantity control section 1250). The optical elements are disposed in the air flow path. The quantity of the light with which the optical elements are irradiated is set to a predetermined light quantity in a usual operation state. The cooling section starts cooling the air flowing through the air flow path, when receiving an operation start instruction which instructs the operation start of the self apparatus. When receiving the operation start instruction, the light quantity control section controls the light quantity so that the optical elements are irradiated with the light having a light quantity smaller than the predetermined light quantity.

According to such an aspect, the cooling section starts cooling the air flowing through the air flow path, when receiving the operation start instruction which instructs the operation start of the self apparatus. When receiving the operation start instruction, the light quantity control section controls the light quantity so that the optical elements are irradiated with the light having a light quantity smaller than the predetermined light quantity. Therefore, from when the operation start instruction is received until a usual operation state is obtained, the temperatures of the optical elements can be prevented from exceeding the upper limit of the allowable temperature range.

The projector **characterized in that** in the invention of the sixth aspect, even when receiving the operation start instruction, the light quantity control section controls the light quantity so that the optical elements are not irradiated with the light.

The projector **characterized in that** in the invention of the sixth aspect, the light source is constituted of a plurality of light sources. When receiving the operation start instruction, the light quantity control section controls the light quantity so that the optical elements are irradiated only with the light emitted from the light sources of one part of the plurality of light sources.

The projector **characterized in that** in the invention of the sixth aspect, the light source is constituted of a plurality of light sources. When receiving the operation start instruction, the light quantity control section controls the light quantity so that the optical elements are irradiated with the light emitted from the light sources of the one part of the plurality of light sources temporally behind the light emitted from the light sources of the other part. The light sources of the one part and the light sources of the other part are geometrically symmetric.

The projector **characterized in that** in the invention of the sixth aspect, the light quantity control section controls a power to be supplied to the light sources to control the quantity of the light with which the optical elements are irradiated.

The projector **characterized in that** in the invention of the sixth aspect, the projector further comprises a light quantity limiting section interposed between the light source and the optical elements and constituted of a light blocking member (a light quantity limiting section 1060). The light quantity control section controls the light quantity limiting section to control the quantity of the light with which the optical elements are irradiated.

The projector **characterized in that** in the invention of the sixth aspect, the light quantity control section controls the light quantity so that the optical elements are irradiated with the light having a quantity smaller than the predetermined light quantity from when the operation start instruction is received until a predetermined time elapses.

The projector **characterized in that** in the invention of the sixth aspect, the cooling apparatus includes a temperature sensor which detects a temperature in the air flow path (a temperature sensor 1381). The light quantity control section controls the light quantity so that the optical elements are irradiated with the light having a light quantity smaller than the predetermined light quantity from when the operation start instruction is received until the temperature detected by the temperature sensor lowers below a predetermined temperature.

The projector **characterized in that** in the invention of the sixth aspect, the cooling apparatus includes a temperature sensor which detects the temperature of the cooling section (a temperature sensor 1382). The light quantity control section controls the light quantity so that the optical elements are irradiated with the light having a light quantity smaller than the predetermined light quantity from when the operation start instruction is received until the temperature detected by the temperature sensor lowers below a predetermined temperature.

The projector **characterized in that** in the invention of the sixth aspect, the projector further comprises an optical element control section which controls the optical elements (an image control section 1240). The optical elements are a pair of polarizing plates (an entrance side polarizing plate 1041 and an exit side polarizing plate 1042) and a liquid crystal panel sandwiched between the pair of polarizing plates (a liquid crystal panel 1040). When receiving the operation start instruction, the optical element control section controls the liquid crystal panel so that the light emitted from the light source is transmitted through the pair of polarizing plates.

A projector of the invention of a sixteenth aspect provided with a light source disposed in a main body and an optical element group which processes light emitted from the light source in accordance with an image signal to emit the image light comprises a refrigerant circuit in which a compressor, a radiator, a pressure reducing unit and an evaporator are connected to one another via piping so that a refrigerant circulates through the compressor, the radiator, the pressure reducing unit and the evaporator in this order; an air circulation duct through which blowing means forms an air path so that air cooled by the evaporator circulates through the optical element group again to the evaporator; and heating means for heating the air circulation duct, wherein the heating means sets the temperature of the outer surface of the air circulation duct above the dew point of air outside the air circulation duct.

The projector of the invention of a seventeenth aspect is **characterized in that** in the projector of the invention of the sixteenth aspect, the high temperature side of the refrigerant circuit and heat conveyance means for conveying the heat on the high temperature side to the air circulation duct constitute the heating means to heat this air circulation duct.

The projector of the invention of an eighteenth aspect is **characterized in that** in the projector of the invention of the sixteenth aspect, the light source and heat conveyance means for conveying the heat of the light source to the air circulation duct constitute the heating means to heat this air circulation duct.

The projector of the invention of a nineteenth aspect is **characterized in that** in the projector of the invention of the sixteenth aspect, the heating means is a Peltier element, the air circulation duct is heated on the heat release side of the Peltier element, and the air in the air circulation duct is cooled on the heat absorption side of the Peltier element.

The projector of the invention of a twentieth aspect is **characterized in that** in the projector of the invention of the sixteenth aspect, the light source, the radiator and/or the compressor constitute the heating means, and the air heated by the heating means is brought into contact with the outer surface of the air circulation duct to heat the outer surface thereof.

The projector of the invention of a twenty-first aspect is **characterized in that** in the projector of the invention of the sixteenth aspect, the heating means is indoor air, and the indoor air (the outside air) taken from the outside of the projector is brought into contact with the outer surface of the air circulation duct to heat the outer surface thereof.

A projector of the invention of a twenty-second aspect provided with a light source disposed in a main body and an optical element group which processes light emitted from the light source in accordance with an image signal to emit the image light comprises a refrigerant circuit in which a compressor, a radiator, a pressure reducing unit and an evaporator are connected to one another via piping so that a refrigerant circulates through the compressor, the radiator, the pressure reducing unit and the evaporator in this order; and an air circulation duct through which blowing means forms an air path so that air cooled by the evaporator circulates through the optical element group again to the evaporator, wherein a part of the air circulation duct is provided with a light transmitting member through which the light emitted from the light source passes, and heating means is disposed in an attachment allowance region where the light transmitting member is attached to the air circulation duct or in the vicinity of the attachment allowance region, to set the temperature of the outer surface of the transmitting member above the dew point of the air along the outer surface of the transmitting member.

### Effect of the Invention

According to the present invention, a projector provided with a light source disposed in a main body and an optical element group which processes light emitted from this light source in accordance with an image signal to emit the image light comprises cooling means disposed in the main body; a sealed or substantially sealed duct through which cold air cooled by this cooling means is circulated and supplied to the optical element group to cool the optical element group; ventilation means for introducing outside air into this duct to discharge the air from the duct; and control means for controlling this ventilation means to execute a ventilating operation in the duct, whereby the outside air can be introduced into the duct, and the air can be discharged to the outside of the duct. Therefore, water in the air of the duct can be discharged to the outside. In consequence, the occurrence of dew condensation in the duct can be prevented.

According to the invention of the second aspect, in the above invention, the ventilation means comprises the outside air introduction port and the air discharge port formed in the duct, and the dampers which open and close the outside air introduction port and the air discharge port, respectively, the control means opens the outside air introduction port and the air discharge port by the dampers to execute the ventilating operation, and the cooling means is disposed in the duct between the outside air introduction port and the air discharge port, whereby the outside air introduced through the outside air introduction port can be passed through the cooling means to discharge water in the air adhering to this cooling means to the outside of the duct through the air discharge port. This can prevent the occurrence of dew condensation in the duct, especially onto the cooling means.

Especially as in the invention of the third aspect, when the dampers open the outside air introduction port and the air discharge port, the outside air introduction port and the air discharge port are isolated from the optical element group, whereby the outside air does not flow through the optical element group, and hence it is possible to prevent a disadvantage that dust included in the outside air adheres to the optical elements.

Furthermore, as in the invention of the fourth aspect, the projector comprises the desiccant disposed in the duct, and the desiccant heating heater which heats this desiccant, and the control means allows the desiccant heating heater to generate the heat, when the ventilation means executes the ventilating operation, whereby the water in the duct can be removed by the desiccant. Moreover, during the ventilating operation, the desiccant heating heater is allowed to generate the heat, whereby the desiccant can be heated to discharge the water from the desiccant. Furthermore, the water of the duct discharged by the desiccant can be discharged to the outside of the duct. In consequence, it is possible to avoid a disadvantage that the water of the duct adsorbed by the desiccant is discharged again into the duct.

In particular, since the water adsorbed by the desiccant can be discharged to the outside during the ventilating operation, the water of the desiccant can efficiently be discharged to the outside. In consequence, a problem that the amount of the water adsorbed by the desiccant increases to deteriorate an adsorption performance can be solved as much as possible.

Moreover, as in the invention of the fifth aspect, the control means executes the ventilating operation by the ventilation means, when the cooling operation of the cooling means is stopped and the temperature of the cooling means rises above the dew point of the outside air, whereby the ventilating operation can be executed without influencing a usual cooling operation. Moreover, only when the occurrence of the dew condensation is feared, the ventilating operation can be executed.

Furthermore, according to the present invention, there can be provided a projector which can prevent the temperatures of the optical elements from exceeding the upper limit of the allowable temperature range.

According to the invention of the sixteenth aspect, the projector comprises control means for supplying the cold air cooled to a temperature which is not higher than room temperature by a cooler to the optical element group through the air circulation duct and for setting the temperature of the outer surface of the air circulation duct above the dew point by the heating means, whereby the inner and outer surfaces of the duct can be heated by the heating means to prevent the dew condensation, while cooling the optical element group. In consequence, dew (water) condensed on the inner and outer surfaces of the duct can be prevented from disadvantageously flying and scattering to the optical element group, electric and electronic parts, mechanical parts and the like. Moreover, it is also possible to prevent a disadvantage that mold and bacteria proliferate on the inner and outer surfaces of the optical element group and the air circulation duct owing to the dew condensation. Therefore, the inner and outer surfaces of the optical element group and the air circulation duct can constantly be maintained in a clean state where there is not any dew condensation, mold or bacteria, and the quality enhancement or cost reduction of the optical element group can be achieved.

Moreover, the inner and outer surfaces of the air circulation duct can be heated by the heating means to prevent the dew condensation, whereby the air circulation duct having high insulation properties and a large thickness does not have to be used for insulation, and the degree of freedom in spatial layout design can be increased.

According to the invention of the seventeenth aspect, there is not any positional restriction on a positional relation between the high temperature side (the radiator) and the air circulation duct, and hence an assembling operation during manufacturing, a disassembling operation during repair or the like or an assembling operation after the repair can easily be performed. Therefore, devices disposed in the air circulation duct can easily be disassembled or assembled, and operation properties can remarkably be enhanced.

According to the invention of the eighteenth aspect, since the light source and the heat conveyance means for conveying the heat of the light source to the air circulation duct constitute the heating means to heat the duct, the duct can be heated by the heat of the light source. Moreover, since the heat conveyance means conveys the heat of the light source to the air circulation duct, the light source can conversely be cooled. This can prevent the superheat of the light source, and the quality of the projector can be maintained.

According to the invention of the nineteenth aspect, the heating means is the Peltier element, the air circulation duct is heated on the heat release side of the Peltier element, and the air in the air circulation duct is cooled on the heat absorption side of the Peltier element, whereby while heating the inner and outer surfaces of the duct on the heat release side of the Peltier element to prevent the occurrence of the dew condensation, it is possible to perform both the heating of the air circulation duct and the cooling of the air in the duct, thereby absorbing the heat on the heat absorption side to cool the optical element group. In consequence, the operation ratio of the cooling means can be decreased, and noise generated from the cooling means can also be decreased.

According to the invention of the twentieth aspect, heat generation devices disposed in the main body constitute the heating means, and the air heated by the heat generation devices (various power sources, a substrate, etc.) is brought into contact with (blown onto) the outer surface of the air circulation duct to heat the outer surface thereof, whereby hot air can be produced by the heat generated from, for example, the light source or the radiator to heat the air circulation duct. In consequence, any special heat source for heating the air circulation duct is not necessary, and heating energy can be saved. Therefore, the dew condensation on the inner and outer surfaces of the air circulation duct can be prevented at a low cost, and power consumption can be decreased.

According to the invention of the twenty-first aspect, the heating means is the indoor air in a room where the projector is installed (when the projector is installed outdoors, the heating means is outside air (atmospheric air)), and the duct is heated by the air taken from the outside of the projector, whereby even if any special heating source is not used, the duct can be heated above the dew point. In consequence, any special heat source for heating the duct is not necessary, and the heating energy can be saved. Therefore, the cost for preventing the dew condensation of the duct can remarkably be decreased.

According to the invention of the twenty-second aspect, the attachment allowance region required for attaching the light transmitting member to a part of the air circulation duct or the vicinity of the region is a portion which does not contribute to the projection image of the emitted light. The heating means is installed in this portion, whereby the duct can effectively be heated without blocking any projection image, and the dew condensation can be prevented.

### Brief Description of the Drawings

FIG. 1 is a schematic constitution diagram of a liquid crystal projector of one embodiment of a projector of the present invention (Embodiment 1);
FIG. 2 is a control block diagram of control means of the liquid crystal projector of FIG. 1;
FIG. 3 is a timing chart of the liquid crystal projector of FIG. 1;
FIG. 4 is a schematic constitution diagram of a projector of another embodiment of the projector of the present invention (Embodiment 2);
FIG. 5 is a schematic constitution diagram of a projector of still another embodiment of the projector of the present invention (Embodiment 3);
FIG. 6 is a diagram showing a projection type image display apparatus 1100 according to a first example in Embodiment 4 of the present invention (Embodiment 4);
FIG. 7 is a diagram showing a cooling apparatus 1300 according to the first example;
FIG. 8 is a diagram for explaining a refrigerant according to the first example;
FIG. 9 is a block diagram showing a control unit 1200 according to the first example;
FIG. 10 is a diagram for explaining the cooling of optical elements according to the first example;
FIG. 11 is a diagram showing a projection type image display apparatus 1100 according to a second example in Embodiment 4 of the present invention;
FIG. 12 is a block diagram showing a control unit 1200 according to the second example;
FIG. 13 is a diagram showing a projection type image display apparatus 1100 according to a third example in Embodiment 4 of the present invention;
FIG. 14 is an image diagram showing the arrangement of a light source 1010 according to the third example;
FIG. 15 is an image diagram showing the arrangement of the light source 1010 according to a modification of the third example;
FIG. 16 is a diagram showing a projection type image display apparatus 1100 according to a fourth example in Embodiment 4 of the present invention;
FIG. 17 is a diagram showing a projection type image display apparatus 1100 according to a fifth example in Embodiment 4 of the present invention;
FIG. 18 is a diagram showing a projection type image display apparatus 1100 according to a sixth example in Embodiment 4 of the present invention;
FIG. 19 is a perspective view of a liquid crystal projector (an upper surface opening and a partial cutout) showing one embodiment of the present invention (Embodiment 5);
FIG. 20 is an inner constitution diagram of the liquid crystal projector showing the embodiment of FIG. 19;
FIG. 21 is a block diagram of a control apparatus of the liquid crystal projector showing the embodiment of the present invention;
FIG. 22 is a side view of an attachment portion of a light transmitting member to a duct of the present invention;
FIG. 23 is a vertical side view (an exemplary diagram) of a duct constituting a liquid crystal projector showing another embodiment of the present invention (Embodiment 6);
FIG. 24 is a perspective view of a liquid crystal projector showing still another embodiment of the present invention (Embodiment 7);
FIG. 25 is a perspective view of a liquid crystal projector showing a further embodiment of the present invention (Embodiment 8);
FIG. 26 is a perspective view of a liquid crystal projector showing a further embodiment of the present invention (Embodiment 9);
FIG. 27 is a perspective view of a liquid crystal projector showing a still further embodiment of the present invention (Embodiment 10); and
FIG. 28 is a perspective view of the liquid crystal projector showing the embodiment of the present invention. Description of Reference Numerals

- C: controller (control means)
- P: liquid crystal projector (projector)
- 1: main body
- 2: light source
- 3: optical path change member
- 4: color splitting optical system
- 5: optical element group
- 6, 7 and 8: liquid crystal panel
- 9: polarizing plate
- 10: projection lens
- 11: cooling apparatus (cooling means)
- 12: compressor
- 14: radiator
- 16: expansion valve (throttle means)
- 18: cooler (evaporator)
- 20: dichroic mirror
- 25: prism
- 27: optical path
- 30: duct
- 32: outside air introduction port
- 33: air discharge port
- 34 and 35: damper
- 37: desiccant
- 38: desiccant heating heater
- 40: tray
- 41: drainage container
- 42: heater for drainage container
- 43 and 44: drain opening/closing valve
- 45: heater for cooler
- 50: cooler temperature sensor
- 55: outside air temperature sensor
- 60: filter
- 1010: light source
- 1020: fly eye lens unit
- 1030: PBS array
- 1040: liquid crystal panel
- 1041: entrance side polarizing plate
- 1042: exit side polarizing plate
- 1050: cross dichroic prism
- 1060: light quantity limiting section
- 1100: projection type image display apparatus
- 1111 and 1112: dichroic mirror
- 1121 to 1123: reflective mirror
- 1131 to 1133: condenser lens
- 1140: condenser lens
- 1151 to 1153: relay lens
- 1160: projection lens unit
- 1170: reflective mirror
- 1200: control unit
- 1210: operation accepting section
- 1220: light source control section
- 1230: cooling control section
- 1240: image control section
- 1250: limiting quantity control section
- 1300: cooling apparatus
- 1310: air flow path
- 1320: heat absorber
- 1330: compressor
- 1340: radiator
- 1350: 0pru
- 1340: radiator
- 1350: pressure reducing unit
- 1360: refrigerant flow path
- 1370: circulation fan
- 1381: temperature sensor
- 1382: temperature sensor
- 1410: light source
- 1420 and 1430: dichroic mirror
- 1440: two-dimensional scanning mirror
- 1450: screen
- 1510: light source
- 1520: lens
- 1530: linear optical element
- 1540: lens
- 1550: one-dimensional scanning mirror
- 1560: screen
- 2001: main body
- 2002: light source
- 2003: uniform illumination optical system
- 2004: optical element group
- 2005, 2006 and 2007: liquid crystal panel
- 2008A and 2008B: polarizing plate
- 2009: projection lens
- 2010: cooling apparatus
- 2012: compressor
- 2014: radiator
- 2016: capillary tube (pressure reducing unit)
- 2018: evaporator
- 2018F: heat release fan
- 2020: lamp
- 2022: lamp box
- 2042: fan for circulating cold air
- 2050: duct
- 2052: cooling air path
- 2060: control apparatus
- 2062: indoor temperature sensor
- 2063: indoor humidity sensor
- 2064: in-duct air temperature sensor
- 2054: duct surface temperature sensor
- 2066: electric heater
- 2066a: film-like electric heater
- 2066b: linear electric heater
- 2067: heat conveyance fan
- 2068: Peltier element
- 2072: heat pipe
- 2075: metal arm

### Best Mode for Carrying out the Invention

The present invention relates to a projector, and has been developed to eliminate a disadvantage that dew condensation occurs in a sealed or substantially sealed duct which supplies, to an optical element group, cold air subjected to heat exchange between air and a cooler (an evaporator). The object of preventing the dew condensation of the duct is realized by the projector comprising cooling means disposed in a main body; a sealed or substantially sealed duct through which the cold air cooled by this cooling means is circulated and supplied to an optical element group to cool the optical element group; ventilation means for introducing outside air into this duct to discharge the air from the duct; and control means for controlling this ventilation means to execute a ventilating operation in the duct. Hereinafter, embodiments of the present invention will be described in detail with reference to the drawings.

### Embodiment 1

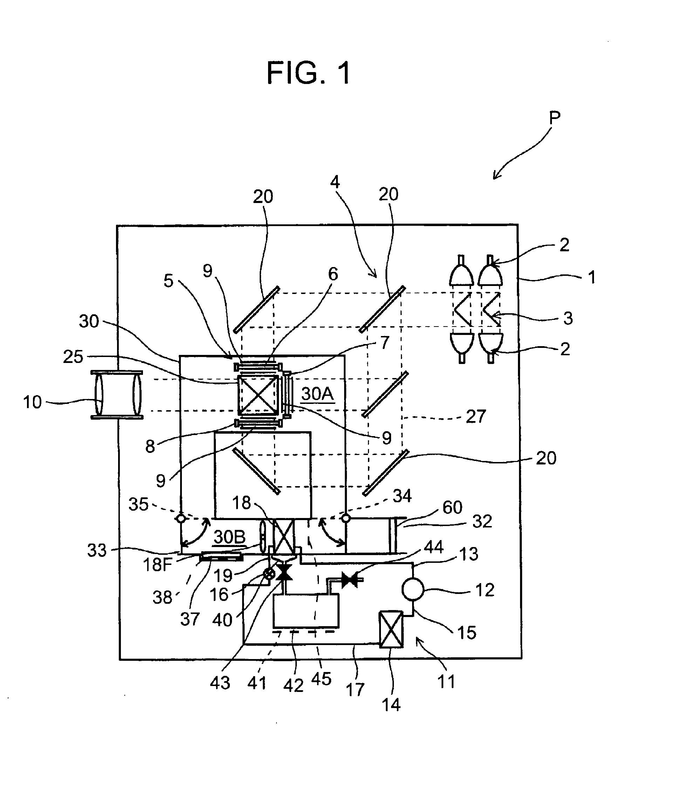

FIG. 1 is a schematic constitution diagram showing a projector of one embodiment of the present invention. The projector of the embodiment is a liquid crystal projector P including a light source 2, an optical path change member 3, a color splitting optical system 4, an optical element group 5, projection lenses 10 and a cooling apparatus 11 for the optical element group 5 in a main body 1. The main body 1 is a flat housing made of a material having excellent heat release properties, for example, a material such as magnesium.

The light source 2 is constituted of lamps such as super high mercury lamps, and reflectors for emitting light diverging from the lamps (the diverging light) forwards. The light source 2 of the embodiment has a constitution in which reflectors are attached to a plurality of (four) lamps, respectively, and is received in a lamp box (not shown) disposed in the main body 1.

The optical path change member 3 forms the light emitted from the light source 2 into a parallel light flux having a uniform luminance distribution, and is constituted of an integrator lens, a condensing lens, a total reflection mirror and the like. Moreover, the color splitting optical system 4 splits the parallel light flux into color beams of colors R, G and B, and is constituted of dichroic mirrors 20 which split the parallel light flux from the optical path change member 3 into the respective color beams to guide the respective split color beams to the optical element group 5 and the like.

The optical element group 5 is constituted of three liquid crystal panels (LCD panels) 6, 7 and 8, polarizing plates 9 arranged with spaces on the entrance and exit sides of the liquid crystal panels 6, 7 and 8, a prism 25 and the like. The liquid crystal panels 6, 7 and 8 process (modulate) the light split by the color splitting optical system 4 and guided to the liquid crystal panels 6, 7 and 8 in accordance with an image signal. Moreover, the prism 25 synthesizes the respective color beams to form a projection light image (the image light). The prism 25 has a reflective surface constituted of an X-shaped dielectric multilayered film, and the beams from the liquid crystal panels 6, 7 and 8 are formed as a single light flux through the reflective surface. It is to be noted that the projection lenses 10 enlarge and project the projection light image from the prism 25 onto a screen, and is detachably disposed in a hole (not shown) formed in the wall surface of the main body 1. It is to be noted that in FIG. 1, a broken line 27 is an optical path for guiding the light emitted from the light source 2 to the liquid crystal panels 5, 6 and 7, the polarizing plates 9 and the like, and the optical path 27 is covered with a box member (not shown). That is, the optical path through which the light passes from the light source 2 to the polarizing plates 9 on the entrance sides of the liquid crystal panels 6, 7 and 8 (the optical path 27) is formed in the box member.

An operation of the above constitution will be described. The light emitted from the light source 2 is formed into a parallel light flux having the uniform luminance distribution by the optical path change member 3, split into the respective beams of the colors R, G and B in the color splitting optical system 4, and guided to the liquid crystal panels 6, 7 and 8 which function as corresponding light bulbs by the polarizing plates 9 on the entrance side. The beams guided to the liquid crystal panels 6, 7 and 8 are modulated in accordance with the image signal, formed into the projection image of the single light flux by the prism 25 by the polarizing plates 9 on the exit side, and then enlarged and projected onto the screen by the projection lenses 10.

Meanwhile, in the liquid crystal projector, heretofore, the light source and the respective liquid crystal panels have become heat generation sources to bring the inside of the main body into a heated state, and hence a plurality of fans have been installed in the main body to supply air from the outside of the main body to the liquid crystal panels and the light source by the fans, thereby releasing heat. One example will specifically be described. The air is introduced from the outside of the main body, this air is supplied to the liquid crystal panels to release the heat, and the air passed through the liquid crystal panels is supplied to the light source to release the heat from the light source. Afterward, the air heated by the light source is discharged to the outside of the main body by the fans.

The light source reaches a temperature which is as high as about +900°C. Therefore, the air passed through the liquid crystal panels can be supplied to sufficiently release the heat. On the other hand, the upper limit of the use temperature of the liquid crystal panels is a comparatively low temperature of about +70°C to +80°C, and the liquid crystal panels need to be cooled so that the temperatures of the liquid crystal panels are not higher the upper limit temperature. In consequence, the amount of the heat which can be released by the liquid crystal panels is noticeably influenced by the temperature of the outside air. That is, when the outside air has a low temperature, the temperature of the outside air supplied to the liquid crystal panels is low, and hence the heat can sufficiently be released by the outside air. However, in a case where the temperature of the outside air is high, when a large amount of the outside air is not supplied to the liquid crystal panels by increasing the air amount of the fans or the like, the temperatures of the liquid crystal panels cannot be maintained so that the temperatures are not higher than the upper limit of the use temperature range. In consequence, noise increases owing to the operation of the fans, and power consumption remarkably increases owing to the operation of the fans.

Furthermore, the outside air which has received the heat in the main body is discharged to the outside, but the problem of a so-called short cycle of the air after the heat release also occurs, where the discharged outside air is again sucked by the fans. In this case, the outside air sucked by the fans are subjected to heat exchange between the air and the light source, and heated to the high temperature. Therefore, when such a short cycle is generated, the temperatures of the liquid crystal panels might rise, and the effective heat release cannot sufficiently be obtained.

To solve the problem, the liquid crystal projector P of the present invention includes the cooling apparatus 11 in the main body 1. That is, the cooling apparatus 11 is installed in the main body 1 of the liquid crystal projector P. The cooling apparatus 11 is cooling means for cooling the liquid crystal panels 6, 7 and 8, the polarizing plates 9, the prism 25 and the like, and includes a refrigerant circuit constituted of a compressor 12, a radiator 14, an expansion valve 16 and a cooler (an evaporator) 18. That is, the compressor 12 on a refrigerant suction side (an inlet) is connected to a refrigerant introduction pipe 13, and the compressor on a refrigerant discharge side (an outlet) is connected to a refrigerant discharge tube 15 leading to the radiator 14. The outlet of the radiator 14 is connected to a refrigerant pipe 17 leading to the expansion valve 16. Moreover, the outlet of the expansion valve 16 is connected to the inlet of the cooler 18 via a refrigerant pipe 19, and the outlet of the cooler 18 is connected to the refrigerant introduction pipe 13 of the compressor 12 to constitute a ring-like refrigerant circuit.

It is to be noted that in the present embodiment, the expansion valve 16 is used as pressure reducing means for decreasing the pressure of the refrigerant, but the pressure reducing means is not limited to the expansion valve 16, and any means may be used as long as the pressure of the refrigerant can be decreased. For example, a capillary tube may be used as the pressure reducing means.

In this case, cold air cooled by the cooler 18 of the cooling apparatus 11 is supplied to the optical element group 5 through a duct 30. In the present embodiment, the optical element group 5, the cooler 18 of the cooling apparatus 11 and a fan 18F of the cooler 18 are disposed in the duct 30 having a sealed or substantially sealed structure. Moreover, the air (the cold air) cooled by heat exchange between the air and the refrigerant in the cooler 18 can be circulated through the duct 30 by the fan 18F. That is, the duct 30 is an air flow path through which the cold air cooled by the cooler 18 is circulated, and the optical element group 5 is installed in this air flow path.

It is to be noted that needless to say, the duct 30 is installed so that the duct does not disturb any projection light image (image light) obtained by guiding the light emitted from the light source 2 to the liquid crystal panels 6, 7 and 8, the polarizing plates 9 and the like, modulating the light by the liquid crystal panels 6, 7 and 8, synthesizing the light in accordance with the image signal sent to the prism 25 by the prism 25 and sending the light to the projection lenses 10.

According to the cooling apparatus 11 described above in detail, when the compressor 12 is driven, the low-temperature low-pressure refrigerant is sucked into a compression element (not shown) of the compressor 12 through the refrigerant introduction pipe 11 and compressed in the compressor. The compressed refrigerant having a high temperature and a high pressure is discharged through the refrigerant discharge tube 15 to flow into the radiator 14. The refrigerant which has flowed into the radiator 14 releases the heat by the radiator. The refrigerant which has released the heat by the radiator 14 enters the expansion valve 16 through the refrigerant pipe 17, and passes through the expansion valve 16. In this process, the pressure of the refrigerant is decreased, and the refrigerant having this state flows into the cooler 18.

The refrigerant which has flowed into the cooler 18 takes the heat from the ambient air in the cooler to evaporate. On the other hand, the air (the cold air) cooled by taking the heat thereof by the refrigerant in the cooler 18 is circulated through the duct 30 by the fan 18F. Subsequently, the air is supplied to the liquid crystal panels 6, 7 and 8, the polarizing plates 9, the prism 25 and the like installed in the duct 30. In consequence, the liquid crystal panels 6, 7 and 8, the polarizing plates 9, the prism 25 and the like release the heat to the air, and are cooled.

Afterward, the air heated by receiving the heat from the liquid crystal panels 6, 7 and 8, the polarizing plates 9 and the prism 25 returns to the cooler 18, is cooled by the heat exchange between the air and the refrigerant flowing through the cooler 18, and is again circulated and supplied to the optical element group 5 including the liquid crystal panels 6, 7 and 8, the polarizing plates 9, the prism 25 and the like, thereby repeating such a cycle.

Meanwhile, in the cooling apparatus 11, the temperature of the cooler 18 is not higher than the dew point, the water is easily condensed, and combined to form the dew condensation water. This dew condensation water might enter the optical element group 5, thereby causing damage to the optical element group 5 or hindering the processing of the light emitted from the light source 2.
In consequence, heretofore, an attempt has been made to dispose the optical element group 5 in the duct having the sealed or substantially sealed structure, install a desiccant such as silica gel, zeolite, activated carbon or activated alumina in this duct, positively remove the water from the air by the desiccant and prevent the occurrence of the dew condensation.

However, even in a case where the optical element group 5 and the cooling means are arranged in the duct having such a sealed or substantially sealed structure, when the projector is used once, about several grams of water is collected. Furthermore, the amount of the water which can be adsorbed by the desiccant is limited. In addition, when the amount of the water to be adsorbed by the desiccant increases, an adsorption performance deteriorates, and hence it is not possible to solve a problem that the dew condensation occurs or the generated dew condensation water enters the optical element group.

To solve the problem, in the present invention, the projector includes ventilation means for introducing the outside air into the duct 30 to discharge the air from the duct 30, and control means for controlling this ventilation means to execute a ventilating operation in the duct 30. Specifically, the ventilation means of the present embodiment is constituted of an outside air introduction port 32 and an air discharge port 33 formed in the duct 30, and dampers 34 and 35 which open and close the outside air introduction port 32 and the air discharge port 33, respectively. That is, the damper 34 openably closes the outside air introduction port 32, and the damper 35 openably closes the air discharge port 33. Moreover, the duct 30 has the sealed or substantially sealed structure in a state where the outside air introduction port 32 is closed by the damper 34 and the air discharge port 33 is closed by the damper 35.

Moreover, the opening/closing operations of the dampers 34 and 35 are controlled by a controller C described later. Specifically, when the controller C opens the dampers 34 and 35 (at this time, the dampers 34 and 35 have a state shown by a broken line in FIG. 1) to open the outside air introduction port 32 and the air discharge port 33, the ventilating operation is executed to introduce the outside air into the duct 30 through the outside air introduction port 32, thereby discharging the air of the duct 30 to the outside of the duct 30.

In this case, the outside air introduction port 32 is disposed on one side and the air discharge port 33 is disposed on the other side so that the cooler 18 and the fan 18F of the cooling apparatus 11 in the duct 30 are sandwiched between the outside air introduction port 32 and the air discharge port 33. That is, the cooler 18 and the fan 18F of the cooler are interposed between the outside air introduction port 32 and the air discharge port 33 of the duct 30. Furthermore, in the present embodiment, the outside air introduction port 32, the cooler 18, the fan 18F and the air discharge port 33 are linearly arranged in this order.

On the other hand, the dampers 34 and 35 of the present embodiment has a constitution in which when the outside air introduction port 32 and the air discharge port 33 are opened, the outside air introduction port 32 and the air discharge port 33 are isolated from the optical element group 5. Specifically, when the outside air introduction port 32 and the air discharge port 33 are opened by the dampers 34 and 35, respectively, as shown by the broken line in FIG. 1, a part of the duct 30 is closed by the damper 34 or 35. At this time, a path in the duct 30 connected to the optical element group 5 is closed by the damper 34 or 35, whereby the optical element group 5 is isolated in a substantially sealed space 30A in which one end of the duct 30 is closed by the damper 34 and the other end thereof is closed by the damper 35. It is to be noted that in FIG. 1, 30A is the inside of the duct 30 on the optical element group 5 side isolated from the outside air introduction port 32 and the air discharge port 33, when the outside air introduction port 32 and the air discharge port 33 are opened, and 30B is the inside of the duct 30 on a side opposite to the optical element group 5. At this time, the cooler 18 is positioned at the inside 30B of the duct which is not isolated by the dampers 34 and 35.

On the other hand, in the duct 30 of the present embodiment, a desiccant 37 is disposed in the vicinity of the cooler 18 in the duct 30 (30B) which is not isolated by the dampers 34 and 35. The desiccant 37 adsorbs and removes water from the duct 30, and silica gel, zeolite, activated carbon, activated alumina or the like is used as the desiccant 37. In the vicinity of the desiccant 37, a desiccant heating heater 38 is installed as heating means for heating the desiccant 37 to discharge the water adsorbed by the desiccant 37. The energization of the desiccant heating heater 38 is controlled by the controller C. The heating operation of the desiccant heating heater 38 will briefly be described. When the ventilation means executes the ventilating operation, the controller C energizes the desiccant heating heater 38 to heat the desiccant 37, thereby discharging the water adsorbed by the desiccant 37 to the outside. It is to be noted that a specific energizing operation will be described later in detail in the description of a control operation.

It is to be noted that in FIG. 1, 60 is a filter disposed in the duct 30 in the vicinity of the outside air introduction port 32 to collect dust from the air sucked into the duct 30 through the outside air introduction port 32, thereby preventing the dust from entering the duct 30 as much as possible. Moreover, 40 is a tray for receiving drainage (the dew condensation water) of the cooler 18, 41 is a drainage container in which the drainage received by the tray 40 can be contained, 42 is a heater for the drainage container which heats and evaporates the drainage received in the drainage container 41, 43 is a drain opening/closing valve disposed on a pipe which connects the tray 40 to the drainage container 41, 44 is a drain opening/closing valve which opens and closes a pipe for discharging the air including humidity evaporated by heating the heater 42 for the drainage container to the outside of the duct 30, and 45 is a heater for the cooler which heats the cooler 18.

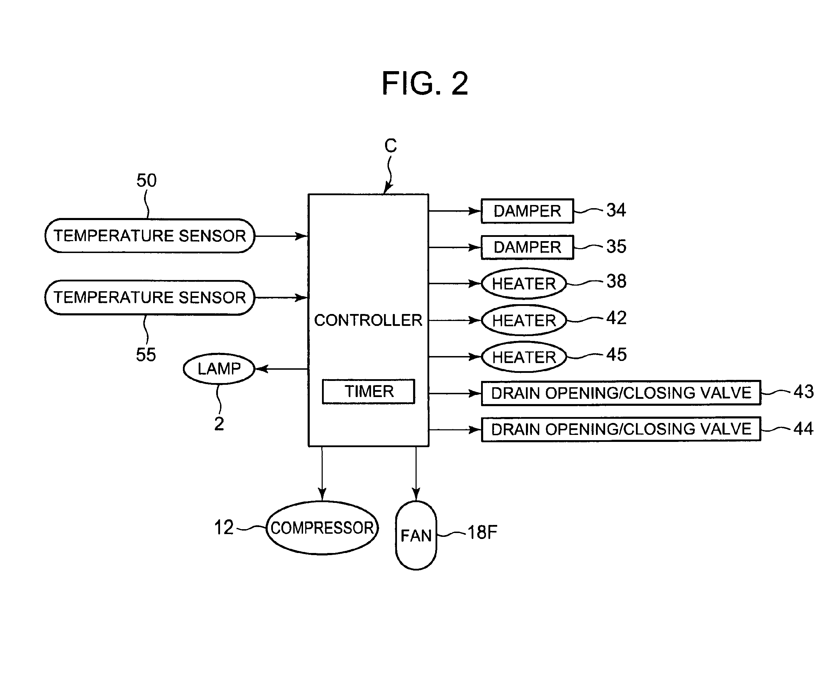

On the other hand, the controller C is control means for controlling the liquid crystal projector P. FIG. 2 is a control block diagram of the controller C. As shown in FIG. 2, the controller C on an input side is connected to a cooler temperature sensor 50, an outside air temperature sensor 55 and the like. The cooler temperature sensor 50 is temperature detection means for detecting the temperature of the cooler 18. Moreover, the outside air temperature sensor 55 is outside air temperature detection means for detecting the temperature of the outside of the main body 1 (the temperature of the air around the liquid crystal projector P). Furthermore, the controller C on an output side is connected to the compressor 12, the fan 18F of the cooler 18, the dampers 34 and 35, the desiccant heating heater 38, the heater 42 for the drainage container, the heater 45 for the cooler, the light source 2 (light source lamps) and the drain opening/closing valves 43 and 44.

Moreover, the controller C controls the operations of the compressor 12, the fan 18F of the cooler 18, the dampers 34 and 35, the desiccant heating heater 38, the heater 42 for the drainage container, the heater 45 for the cooler, the light source 2 (the light source lamps) and the drain opening/closing valves 43 and 44 connected to the output side of the controller based on the outputs of the cooler 18, the cooler temperature sensor 50, the outside air temperature sensor 55 and the like connected to the input side of the controller. Especially in the present invention, the controller C executes the ventilating operation for opening the outside air introduction port 32 and the air discharge port 33 by the dampers 34 and 35 and introducing the outside air into the duct 30 to discharge the air from the duct 30. Moreover, when the ventilating operation is executed, the controller energizes the desiccant heating heater 38 to generate the heat, thereby discharging the water adsorbed by the desiccant 37.

Furthermore, when the cooling operation of the cooling apparatus 11 is stopped and the temperature of the cooler 18 of the cooling apparatus 11 rises above the dew point of the outside air, the controller C executes the ventilating operation. That is, in the present embodiment, when the compressor 12 is stopped and the temperature of the cooler 18 detected by the cooler temperature sensor 50 rises above the dew point of the air outside the main body 1 of the projector P (the outside air) detected by the outside air temperature sensor 55, the controller C opens the outside air introduction port 32 and the air discharge port 33 by the dampers 34 and 35 to execute the ventilating operation.

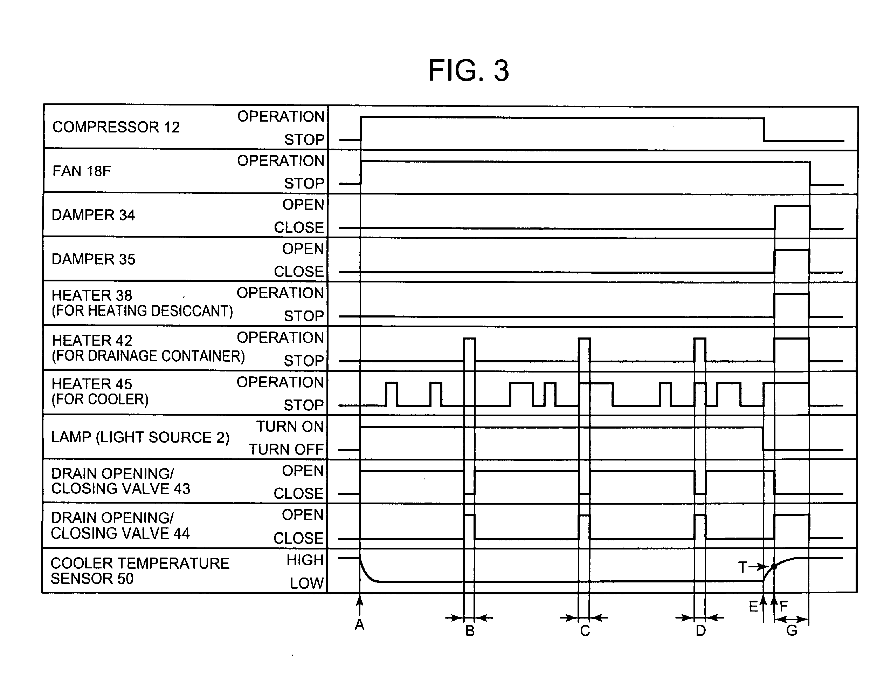

The control operation of the liquid crystal projector P by the controller C will be described in detail with reference to a timing chart shown in FIG. 3. First, when a user turns on the lamps of the light source 2 (time A of FIG. 3), the controller C starts the cooling operation by the cooling apparatus 11. That is, the controller C starts the operations of the compressor 12 and the fan 18F of the cooler 18. At this time, the controller C opens the drain opening/closing valve 43 so that the drainage (the dew condensation water) received by the tray 40 flows into the drainage container 41 to connect the tray 40 to the drainage container 41. In consequence, the drainage (the dew condensation water) which has dropped down to the tray 40 from the cooler 18 flows into the drainage container 41, and is received in the drainage container 41.

As described above, when the operations of the compressor 12 and the fan 18F are started, the low-temperature low-pressure refrigerant is sucked into the compression element (not shown) of the compressor 12 through the refrigerant introduction pipe 11, and is compressed in the element. The compressed refrigerant having a high temperature and a high pressure is discharged through the refrigerant discharge tube 15 to flow into the radiator 14. The refrigerant which has flowed into the radiator 14 releases the heat therein. The refrigerant which has released the heat by the radiator 14 enters the expansion valve 16 through the refrigerant pipe 17, and passes through the expansion valve 16. In this process, the pressure of the refrigerant is decreased, and the refrigerant having this state flows into the cooler 18.

The refrigerant which has flowed into the cooler 18 takes the heat from the ambient air in the cooler to evaporate, flows out of the cooler 18, and is again sucked into the compressor 12 through the refrigerant introduction pipe 13, thereby repeating this cycle.

On the other hand, when the lamps of the light source 2 are lit, the light emitted from the light source 2 is formed into a parallel light flux having a uniform luminance distribution through the optical path change member 3, split into beams of colors R, G and B in the color splitting optical system 4, and guided to the liquid crystal panels 6, 7 and 8 having the functions of the corresponding light bulbs through the polarizing plate 9 on the entrance side. The light fluxes guided to the liquid crystal panels 6, 7 and 8 are modulated in accordance with an image signal in the panels, formed into the projection image of the single light flux by the prism 25 through the polarizing plate 9 on the exit side, and then enlarged and projected onto a screen by the projection lenses 10.

Furthermore, when the lamps of the light source 2 are lit, the controller C obtains the amount of the heat generated by the optical element group 5 in accordance with the image signal, and energizes the heater 45 for the cooler in accordance with the amount of the heat generated by the optical element group 5 so that the total amount of the heat generated in the duct 30 is kept to be constant.

On the other hand, the air (the cold air) cooled by taking the heat thereof by the refrigerant in the cooler 18 is circulated through the duct 30 by the fan 18F. Subsequently, the air is supplied to the liquid crystal panels 6, 7 and 8, the polarizing plates 9, the prism 25 and the like installed in the duct 30. In consequence, the liquid crystal panels 6, 7 and 8, the polarizing plates 9, the prism 25 and the like release the heat to the air, and are cooled. Such a cooling operation sets the temperature of the cooler 18 to a low temperature.

Meanwhile, when such a cooling operation, the water in the air of the duct 30 is condensed on the cooler 18. The condensed water grows to form the drainage (the dew condensation water), drops down to the tray 40, and is received therefrom to the drainage container 41. In consequence, when the operation of the cooling apparatus 11 starts and a predetermined time elapses, the controller C evaporates the drainage (the dew condensation water) of the cooler 18 received in the drainage container 41 to discharge the drainage to the outside. In this case, the controller C closes the drain opening/closing valve 43 to block the connection between the drainage container 41 and the tray 40, and opens the drain opening/closing valve 44 to energize the heater 42 for the drainage container in a state where the drainage container 41 is connected to the outside of the duct 30. In consequence, the drainage container 41 is heated to evaporate the drainage (the dew condensation water) received in the container 41. At this time, the drain opening/closing valve 43 is closed, and hence the evaporated water does not return to the duct 30 through the tray 40 but is discharged to the outside of the duct 30 connected via the drain opening/closing valve 44.

Subsequently, when it is judged by a timer disposed in the controller C that the predetermined time has elapsed after the start of the energization of the heater 42 for the drainage container (corresponding to B, C and D in FIG. 3), the controller C stops the energization of the heater 42 for the drainage container, and closes the drain opening/closing valve 44 to block the connection between the drainage container 41 and the outside. Moreover, the controller opens the drain opening/closing valve 43. In consequence, the tray 40 is connected to the drainage container 41, and the drainage received by the tray 40 is again received in the drainage container 41.

On the other hand, when the user turns off the lamps of the light source 2 (time E in FIG. 3), the controller C stops the cooling operation of the cooling apparatus 11. That is, the controller C stops the operation of the compressor 12. At this time, the controller C does not stop the operation of the fan 18F of the cooler 18 but continuously operates the fan. Furthermore, the controller C energizes (operates) the heater 45 for the cooler simultaneously with the stop of the compressor 12. In consequence, the heater 45 can heat the inside of the duct 30, especially the cooler 18 and the vicinity of the cooler to positively raise the temperature.

Furthermore, as described above, when the cooling operation of the cooling apparatus 11 is stopped and the temperature of the cooler 18 of the cooling apparatus 11 rises above the dew point of the outside air, the controller C executes the ventilating operation. Specifically, when the temperature of the cooler 18 detected by the cooler temperature sensor 50 rises to a predetermined temperature T, for example, a temperature which is 5°C lower than the outside air temperature detected by the outside air temperature sensor 55, the controller C judges that the temperature of the cooler 18 rises above the dew point of the outside air, to execute the ventilating operation (time F in FIG. 3). That is, T shown in FIG. 3 is the dew point. In the present embodiment, the temperature which is 5°C lower than the outside air temperature is the dew point T in this case.

In this way, when the temperature of the cooler 18 detected by the cooler temperature sensor 50 rises above the dew point T (the temperature which is 5°C lower than the outside air temperature in the present embodiment), the controller C opens the dampers 34 and 35, respectively, as shown in the broken line of FIG. 1, to open the outside air introduction port 32 and the air discharge port 33. In consequence, the outside air is introduced into the duct 30 through the outside air introduction port 32 to discharge the air of the duct 30 to the outside of the duct 30.

Furthermore, simultaneously with the opening operations of the dampers 34 and 35, the controller C energizes the desiccant heating heater 38. In consequence, the desiccant 37 is heated, and the water in the air of the duct 30 adsorbed by the desiccant 37 is discharged. This discharged water is discharged to the outside of the duct 30 through the air discharge port 33. Thus, the desiccant 37 is heated by the desiccant heating heater 38, whereby the water in the duct 30 adsorbed by the desiccant 37 can be taken to the outside. Consequently, the desiccant 37 is regenerated and brought into a state where the water can satisfactorily be adsorbed. Therefore, a disadvantage that the amount of the water adsorbed by the desiccant 37 increases to deteriorate the adsorption performance can be eliminated as much as possible.

Also at this time, as in the present invention, during the ventilating operation for opening the outside air introduction port 32 and the air discharge port 33 and introducing the outside air into the duct 30 through the outside air introduction port 32 to discharge the air of the duct 30 to the outside of the duct 30, the desiccant heating heater 38 is energized to heat the desiccant 37, and the water adsorbed by the desiccant 37 is discharged, whereby the water can be discharged to the outside of the duct 30 together with the flow of the air introduced into the duct 30 through the outside air introduction port 32 and discharged through the air discharge port 33. In consequence, it is possible to prevent a disadvantage that the water discharged from the desiccant 37 returns to the duct 30.

Especially in the present embodiment, when the outside air introduction port 32 and the air discharge port 33 are opened, the outside air introduction port 32 and the air discharge port 33 are isolated from the optical element group 5. On the other hand, the desiccant 37 is disposed in the duct 30 (30B) where the outside air introduction port 32 and the air discharge port 33 are positioned on the side opposite to the isolated space 30A of the duct 30. Therefore, it is possible to securely prevent a disadvantage that the water discharged from the desiccant 37 enters the optical element group 5. In consequence, the improvement of the reliability of the liquid crystal projector P can be achieved.

Meanwhile, simultaneously with the opening operations of the dampers 34 and 35 and the energization of the desiccant heating heater 38, the controller C closes the drain opening/closing valve 43 to block the connection between the drainage container 41 and the tray 40, and opens the drain opening/closing valve 44 to energize the heater 42 for the drainage container in a state where the drainage container 41 is connected to the outside of the duct 30. In consequence, the drainage container 41 is heated to evaporate the drainage (the dew condensation water) received in the container 41. At this time, since the drain opening/closing valve 43 is closed, the evaporated water does not return to the duct 30 through the tray 40 but is discharged to the outside of the duct 30 connected via the drain opening/closing valve 44.

Subsequently, after the elapse of the predetermined time from the start of such a ventilating operation, specifically, when the controller C starts counting the timer disposed in the controller at the start of the ventilating operation and the predetermined time beforehand set in the timer elapses (corresponding to G in FIG. 3), the controller C ends the ventilating operation. It is to be noted that the execution time of the ventilating operation, i.e., a time when the dampers 34 and 35 are opened (i.e., the above predetermined time corresponding to G in FIG. 3) is beforehand set to be between several ten seconds and several minutes.

In consequence, the controller C closes the dampers 34 and 35 to close the outside air introduction port 32 and the air discharge port 33, and stops the energization of the desiccant heating heater 38. Furthermore, the controller C stops the energization of the heater 42 for the drainage container, closes the drain opening/closing valve 44 to block the connection between the drainage container 41 and the outside, and opens the drain opening/closing valve 43. Consequently, the tray 40 is connected to the drainage container 41, and the drainage received by the tray 40 is again received in the drainage container 41.

Furthermore, the controller C stops the energization of the desiccant heating heater 38. At this time, the desiccant 37 is heated by the desiccant heating heater 38 to discharge the water, and has already been brought into the regenerated state. In addition, the controller C stops the energization of the heater 45 for the cooler, and stops the operation of the fan 18F of the cooler 18.

As described above in detail, according to the present invention, the cold air cooled by the cooler 18 of the cooling apparatus 11 is circulated and supplied to the optical element group 5 disposed in the sealed or substantially sealed duct 30 to cool the optical element group. Moreover, the outside air introduction port 32 and the air discharge port 33 of the duct 30 are opened by the dampers 34 and 35 to execute the ventilating operation, whereby the outside air introduced through the outside air introduction port 32 is passed through the cooler 18 of the cooling apparatus 11 disposed in the duct 30 between the outside air introduction port 32 and the air discharge port 33, and the water in the air adhering to the cooler 18 can be discharged to the outside of the duct 30 through the air discharge port 33. In consequence, it is possible to prevent the occurrence of the dew condensation in the duct 30, especially onto the cooler 18.

In particular, when the dampers 34 and 35 open the outside air introduction port 32 and the air discharge port 33, the outside air introduction port 32 and the air discharge port 33 are isolated from the optical element group 5. In this case, any outside air does not flow through the optical element group 5, and hence it is possible to prevent a disadvantage that the dust included in the outside air adheres to the optical element group 5.

Furthermore, the desiccant 37 and the desiccant heating heater 38 which heats the desiccant 37 can be disposed in the duct 30 to remove the water in the duct 30 by the desiccant 37. Moreover, when the ventilating operation is executed, the heat is generated by the desiccant heating heater 38. In this case, during the ventilating operation, the desiccant heating heater 38 generates the heat to heat the desiccant 37, whereby the water can be discharged from the desiccant. At this time, since the water discharged from the duct 30 can be discharged to the outside of the duct 30 through the air discharge port 33, the water in the duct 30 adsorbed by the desiccant 37 can be prevented from returning into the duct 30.

In particular, when the cooling operation is stopped and the temperature of the cooler 18 rises above the dew point of the outside air, the ventilating operation is executed as described above. Therefore, the ventilating operation can be executed without influencing the usual cooling operation, and the ventilating operation can be executed only when the occurrence of the dew condensation is feared.

It is to be noted that it has been described in the present embodiment that the cooling means of the present invention is the cooling apparatus 11 including the refrigerant circuit constituted of the compressor 12, the radiator 14, the expansion valve 16 and the cooler 18, and the cooling apparatus 11 is disposed in the main body 1, but the cooling means of the present invention is not limited to this means and may be Peltier element for producing the low-temperature air by electronic cooling to supply the air to the optical element group. That is, any means may be used as the cooling means of the present invention as long as the means can be disposed in the main body to cool the air, thereby supplying the cold air to the optical element group.

However, cooling means such as the above Peltier element for cooling the optical element group by the electronic cooling has a poor energy efficiency, and the means is integrally constituted of a heat generating section during the electronic cooling. Therefore, means for releasing the heat to the outside air (a heat sink or fan) needs to be disposed near a cooling target, and a spatial restriction is disadvantageously generated to remarkably lower the degree of freedom in design.

On the other hand, as in the present embodiment, the cooling apparatus 11 constituted of the compressor 12, the radiator 14, the expansion valve 16 and the cooler 18 is employed as the cooling means, whereby unlike the cooling means for cooling the optical element group by the electronic cooling, the optical element group can efficiently be cooled while solving the problem of energy efficiency. Furthermore, the degree of freedom in spatial layout design can be increased.

It is to be noted that in the present embodiment, when the ventilating operation is executed, the desiccant heating heater 38 is energized to heat the desiccant 37, thereby discharging the water adsorbed by the desiccant 37 to the outside, but the inventions according to first, third and fifth aspects are not limited to this embodiment. That is, even during an operation other than the ventilating operation, the desiccant heating heater 38 may be energized to heat the desiccant 37, thereby discharging the water into the duct 30. In this case, the water discharged into the duct 30 is condensed on the cooler 18, and hence the water discharged from the desiccant 37 does not easily flow through the duct 30 especially on the optical element group 5 side. The water condensed on the cooler 18 then grows to form the drainage (the dew condensation water), drops down to the tray 40, and is received in the drainage container 41. Subsequently, the drainage received in the drainage container 41 is heated to evaporate by the energization of the heater 42 for the drainage container, and is discharged to the outside of the duct 30 as described above.

### Embodiment 2

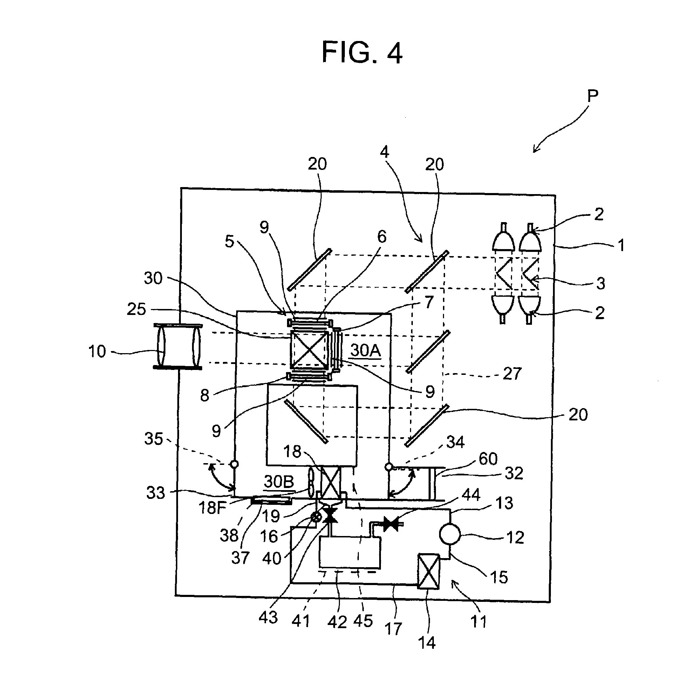

Moreover, in Embodiment 1 described above, the controller C executes the ventilating operation by opening the outside air introduction port 32 and the air discharge port 33, whereby a part of the duct 30 is closed by the dampers 34 and 35, and the optical element group 5 is isolated in the substantially sealed space 30A of the duct 30 closed by the dampers 34 and 35, but the inventions according to first, second, fourth and fifth aspects are not limited to this embodiment. When the dampers 34 and 35 open the outside air introduction port 32 and the air discharge port 33, the dampers move, for example, in the directions of arrows in FIG. 4. That is, the present invention is also effective as a constitution in which during the ventilating operation, the optical element group 5 is not isolated from the outside air introduction port 32 and the air discharge port 33.

In this case, when the ventilating operation is executed, the outside air is also drawn into the duct 30 (the space 30A) provided with the optical element group 5, and the air in the vicinity of the optical element group 5 can be discharged, whereby the ventilating operation can be performed in the vicinity of the optical element group 5.

### Embodiment 3

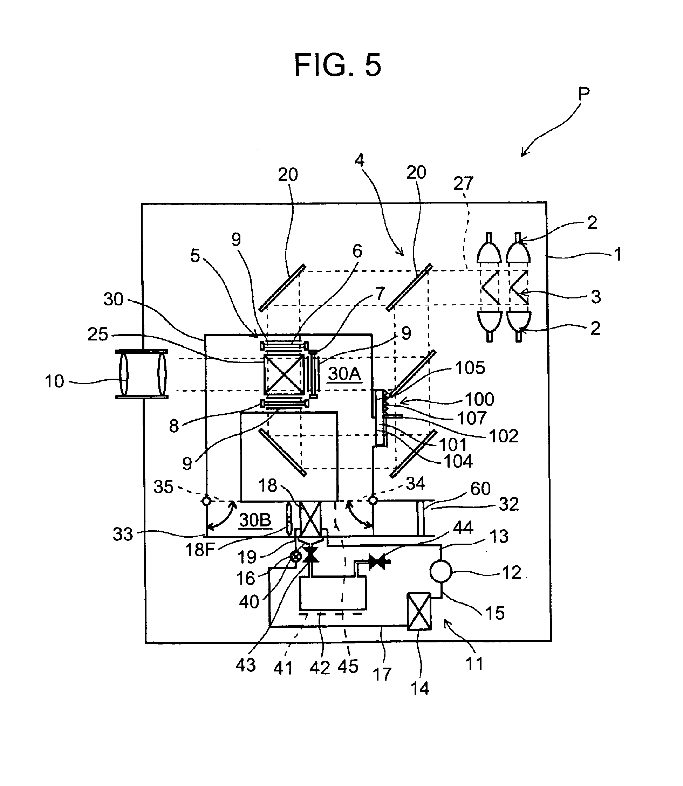

Moreover, in the liquid crystal projector of the above embodiments, a desiccant 37 such as silica gel and the desiccant heating heater 38 for heating the desiccant 37 are installed in the duct 30 to adsorb the water in the duct 30, and during the ventilating operation in which the supply of the cold air to the optical element group 5 is not hindered, the controller C energizes the desiccant heating heater 38 to discharge the water adsorbed by the desiccant 37 to the outside, but there may be disposed a dehumidifier capable of discharging the water adsorbed by the desiccant to the outside of the duct 30 even during an operation other than the ventilating operation. FIG. 5 is a schematic constitution diagram of a liquid crystal projector including a rotary type dehumidifier 100 having a rotary type desiccant rotor 101 as one example of this dehumidifier. It is to be noted that in FIG. 5, components denoted with the same reference numerals as those in FIGS. 1 and 4 exert the same or similar functions or effects, and hence description thereof is omitted here.

In FIG. 5, 100 is the rotary type desiccant dehumidifier of the present embodiment. The desiccant dehumidifier 100 includes the desiccant rotor 101 constituted of a porous columnar rotary member provided with a desiccant such as silica gel, zeolite, activated carbon or activated alumina. The desiccant rotor 101 can be rotated around a rotary shaft 102 by a motor (not shown) at a speed of half rotation per minute.

The desiccant rotor 101 is disposed over a first region 104 having a constitution connectable to the inside of the duct 30 and a second region 105 having a constitution which is not connected to the inside of the duct 30 but can be connected to the outside of the duct 30. The first region 104 is a dehumidifying region for adsorbing the water in the duct, and the second region 105 is a regenerating region for discharging the adsorbed water to regenerate the desiccant.

Moreover, the rotary shaft 102 of the desiccant rotor 101 rotates by the energization of the motor to repeat the movement from the first region 104 as the dehumidifying region connected to the duct 30 to the second region 105 as the regenerating region and the movement from the second region 105 to the first region 104. In the second region, a heater 107 is installed as heating means for heating the desiccant passing through the second region. Furthermore, in the dehumidifier 100, a fan for guiding the air in the duct 30 to the first region 104 and a fan for feeding the air of the second region 105 to the outside of the duct 30 are installed (the fans are not shown).

In consequence, the air in the duct 30 is introduced into the first region 104 of the desiccant rotor 101. At this time, the desiccant present in the first region 104 adsorbs the water included in the air to remove the water from the air in the duct 30. On the other hand, the desiccant positioned in the second region 105 is regenerated, when the adsorbed water from the air in the duct 30 is heated by the heater 107 to evaporate. The water heated by the heater 107 and discharged from the desiccant is discharged to the outside.

Afterward, with the rotation of the desiccant rotor 101, the desiccant present in the first region 104 as described above gradually moves to the second region 105. Similarly, the desiccant positioned in the second region 105 gradually moves to the first region 104.

As in the present embodiment described above in detail, there is used the dehumidifier 100, i.e., a drier having a constitution in which the regenerating region (the second region 105) for heating the desiccant to discharge the adsorbed water to the outside of the duct 30 is not connected to the inside of the duct 30, whereby the adsorption of the water by the desiccant and the discharge of the adsorbed water can continuously be executed. In particular, even during an operation other than the ventilating operation, the water adsorbed by the desiccant can be discharged to the outside of the duct 30, and hence the desiccant present in the first region 104 can constantly satisfactorily adsorb the water, whereby it is possible to securely avoid a disadvantage that an adsorption performance deteriorates.

Furthermore, when the dehumidifier 100 of the present embodiment is disposed in place of the desiccant 37 of the above embodiments, the water discharged from the desiccant might not return into the duct 30, and hence a regenerating operation for discharging the water from the desiccant of the dehumidifier 100 can be executed even during the operation other than the ventilating operation. Therefore, the dehumidifier 100 may be disposed at any position in the duct 30. That is, when an optical element group 5 is isolated in a substantially sealed space 30A closed by dampers 34 and 35 in the duct 30, the dehumidifier 100 may be disposed in the substantially sealed space 30A where the optical element group 5 isolated from an outside air introduction port 32 and an air discharge port 33 is present, or may be disposed in a duct 30B on a side opposite to the space 30A.

Furthermore, in the above embodiments, the liquid crystal projector P has been explained as one example of the projector, but the projector of the present invention is not limited to this example. The present invention may be applied to any projector as long as the projector includes a light source and an optical element group which processes light emitted from the light source in accordance with an image signal to emit the processed projection light image (image light) in a main body. The present invention may effectively be applied to, for example, a DLP projector (DPL (registered trademark)). Moreover, the present invention may effectively be applied to a laser scan projector which irradiates an optical element group with light emitted from a solid light source such as a laser light source to process the light, thereby emitting image light.

### Embodiment 4

Hereinafter, projection type image display apparatuses according to examples of a projector of Embodiment 4 of the present invention will be described with reference to drawings. It is to be noted that in the description with reference to the drawings, the same or similar components are denoted with the same or similar reference numerals.

However, it is to be noted that the diagrams are exemplary, and the ratios of dimensions are different from actual ratios. Therefore, specific dimensions and the like are judged in consideration of the description as follows. Moreover, needless to say, the diagrams include parts having a mutually different dimensional relation or ratio.

### [First Example]

### (Constitution of Projection Type Image Display Apparatus)

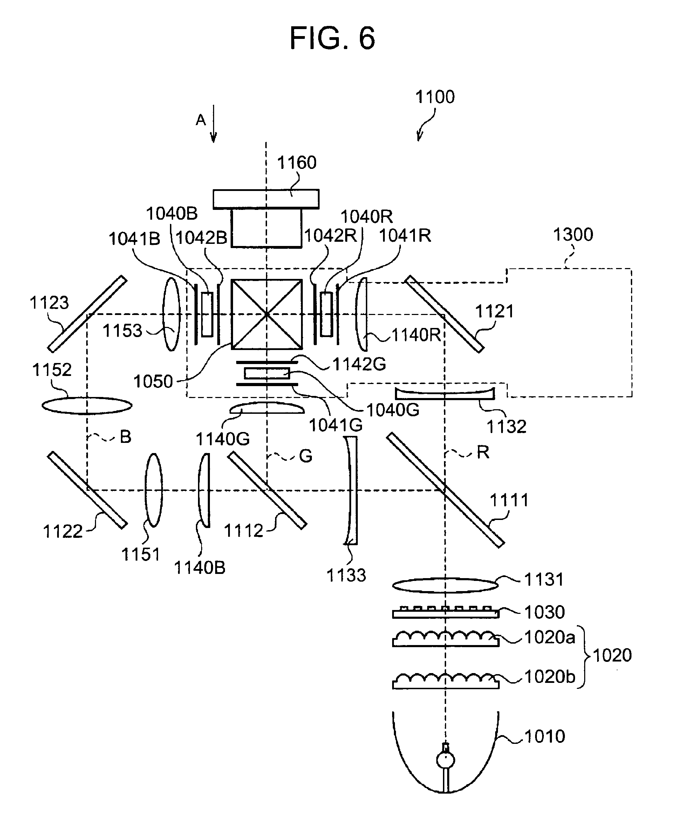

Hereinafter, a constitution of a projection type image display apparatus according to a first example will be described with reference to the drawings. FIG. 6 is a diagram showing a projection type image display apparatus 1100 according to the first example.

As shown in FIG. 6, the projection type image display apparatus 1100 includes a light source 1010, a fly eye lens unit 1020, a PBS array 1030, a plurality of liquid crystal panels 1040 (a liquid crystal panel 1040R, a liquid crystal panel 1040G and a liquid crystal panel 1040B) and a cross dichroic prism 1050.

The light source 1010 is a UHP lamp which emits white light or the like. The light emitted from the light source 1010 includes red component light, green component light and blue component light.

The fly eye lens unit 1020 obtains uniform light from the light emitted from the light source 1010. Specifically, the fly eye lens unit 1020 is constituted of a fly eye lens 1020a and a fly eye lens 1020b.

The fly eye lens 1020a and the fly eye lens 1020b are constituted of a plurality of micro lenses, respectively. The micro lenses condense the light emitted from the light source 1010 so as to irradiate the whole surface of the liquid crystal panel 1040 with the light emitted from the light source 1010.

The PBS array 1030 uniforms the polarized state of the light emitted from the fly eye lens unit 1020. For example, the PBS array 1030 uniforms the light emitted from the fly eye lens unit 1020 as S-polarized light.

The liquid crystal panel 1040R rotates in the polarizing direction of the red component light to modulate the red component light. On the light entrance face side of the liquid crystal panel 1040R, there is disposed an entrance side polarizing plate 1041R which transmits light having one polarizing direction (e.g., P-polarized light) and blocks light having another polarizing direction (e.g., the S-polarized light). On the light exit face side of the liquid crystal panel 1040R, there is disposed an exit side polarizing plate 1042R which blocks the light having one polarizing direction (e.g., the P-polarized light) and transmits the light having the other polarizing direction (e.g., the S-polarized light).

Similarly, the liquid crystal panel 1040G and the liquid crystal panel 1040B rotate in the polarizing directions of the green component light and the blue component light, respectively, to modulate the green component light and the blue component light. On the light entrance face side of the liquid crystal panel 1040G, an entrance side polarizing plate 1041G is disposed, and on the light exit face side of the liquid crystal panel 1040G, an exit side polarizing plate 1042G is disposed. On the light entrance face side of the liquid crystal panel 1040B, an entrance side polarizing plate 1041B is disposed, and on the light exit face side of the liquid crystal panel 1040B, an exit side polarizing plate 1042B is disposed.

The cross dichroic prism 1050 synthesizes the light emitted from the liquid crystal panels 1040R, 1040G and 1040B. The cross dichroic prism 1050 emits the synthesized light on a projection lens unit 1160 side.

Moreover, the projection type image display apparatus 1100 includes a mirror group (a dichroic mirror 1111, a dichroic mirror 1112 and reflective mirrors 1121 to 1123) and a lens group (condenser lenses 1131 to 1133, a condenser lens 1140R, a condenser lens 1140G, a condenser lens 1140B and relay lenses 1151 to 1153).

The dichroic mirror 1111 transmits the red component light of the light emitted from the PBS array 1030. The dichroic mirror 1111 reflects the green component light and blue component light of the light emitted from the PBS array 1030.

The dichroic mirror 1112 transmits the blue component light of the light reflected by the dichroic mirror 1111. The dichroic mirror 1112 reflects the green component light of the light reflected by the dichroic mirror 1111.

The reflective mirror 1121 reflects the red component light to guide the red component light to a liquid crystal panel 1040R side. The reflective mirrors 1122 and 1123 reflect the blue component light to guide the blue component light to a liquid crystal panel 1040B side.

The condenser lens 1131 is a lens which condenses the white light emitted from the light source 1010. The condenser lens 1132 condenses the red component light transmitted through the dichroic mirror 1111. The condenser lens 1133 condenses the green component light and blue component light reflected by the dichroic mirror 1111.

The condenser lens 1140R forms the red component light into substantially parallel light to irradiate the liquid crystal panel 1040R with the red component light. The condenser lens 1140G forms the green component light into substantially parallel light to irradiate the liquid crystal panel 1040G with the green component light. The condenser lens 1140B forms the blue component light into substantially parallel light to irradiate the liquid crystal panel 1040B with the blue component light.

The relay lenses 1151 to 1153 substantially form the blue component light into an image on the liquid crystal panel 1040B while suppressing the enlargement of the blue component light.

Furthermore, the projection type image display apparatus 1100 includes a projection lens unit 1160. The projection lens unit 1160 projects the synthesized light (the image light) emitted from the cross dichroic prism 1050 onto a screen or the like.

Here, the projection type image display apparatus 1100 includes a cooling apparatus 1300 which cools optical elements constituting the projection type image display apparatus 1100. The cooling apparatus 1300 cools optical elements such as the liquid crystal panel 1040, the entrance side polarizing plate 1041 and the exit side polarizing plate 1042.

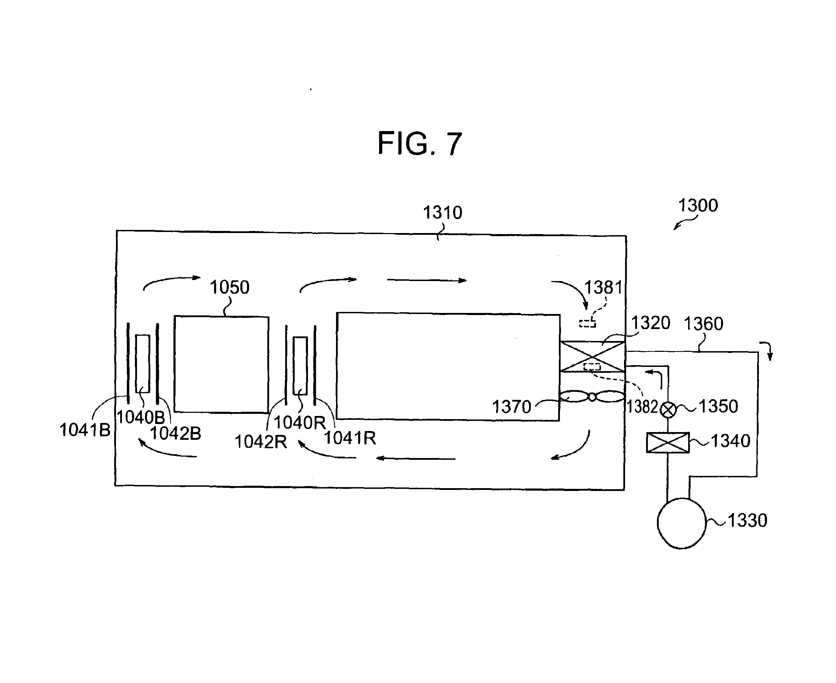

Specifically, the cooling apparatus 1300 has an air flow path which is the flow path of air, and circulates the air through the air flow path. The cooling apparatus 1300 cools the air flowing through the air flow path. The optical elements as cooling targets (the liquid crystal panel 1040, the entrance side polarizing plate 1041, the exit side polarizing plate 1042, and an optical compensation plate (not shown)) are disposed in the air flow path. It is to be noted that the cooling apparatus 1300 will be described later in detail (see FIG. 7).

### (Constitution of Cooling Apparatus)

Hereinafter, a constitution of the cooling apparatus according to the first example will be described with reference to the drawings. FIG. 7 is a diagram showing the cooling apparatus 1300 according to the first example. It is to be noted that in FIG. 7, the projection type image display apparatus 1100 is seen from direction A shown in FIG. 6.

As shown in FIG. 7, the cooling apparatus 1300 includes an air flow path 1310, a heat absorber 1320, a compressor 1330, a radiator 1340, a pressure reducing unit 1350, a refrigerant flow path 1360 and a circulation fan 1370.

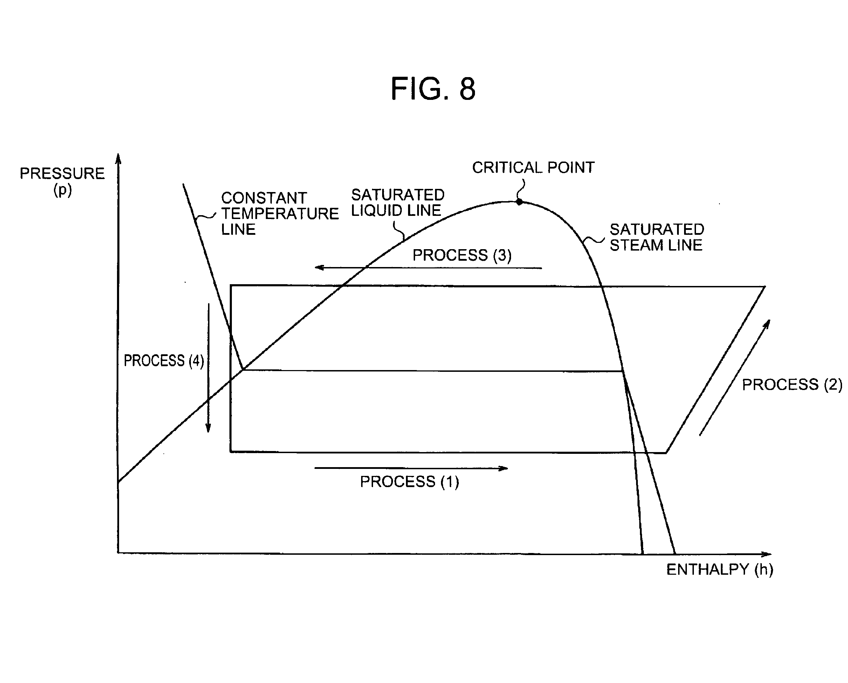

Here, a CO₂ refrigerant will be described as an example of a refrigerant circulating through the refrigerant flow path 1360. Moreover, the circulation of the refrigerant will be described with reference to FIG. 8. In FIG. 8, the ordinate indicates a pressure (P) with respect to the CO₂ refrigerant, and the abscissa indicates the enthalpy (h) of the CO₂ refrigerant. A constant temperature line indicates a combination of the pressure (P) and the enthalpy (h) with which the temperature becomes constant. A saturated liquid line indicates a boundary between supercooling liquid and wet steam, and a saturated steam line indicates a boundary between the wet steam and superheated steam. A critical point is a boundary between the saturated liquid line and the saturated steam line.

The air flow path 1310 is the flow path of the air. As described above, in the air flow path 1310, the optical elements as the cooling targets (the liquid crystal panel 1040, the entrance side polarizing plate 1041, the exit side polarizing plate 1042 and the optical compensation plate (not shown)) are disposed.

The heat absorber 1320 is a cooling section which cools the air flowing through the air flow path 1310 by the refrigerant circulating through the refrigerant flow path 1360. That is, in the heat absorber 1320, the heat of the air flowing through the air flow path 1310 is absorbed by the CO₂ refrigerant. In FIG. 8, as shown in a process (1), while the pressure (P) remains constant, the enthalpy (h) increases owing to the absorption of the heat by the CO₂ refrigerant.

The compressor 1330 compresses the refrigerant evaporated in the heat absorber 1320. In FIG. 8, as shown in a process (2), the superheat degree of the CO₂ refrigerant increases owing to the increase of the pressure (P).

The radiator 1340 releases the heat of the refrigerant compressed by the compressor 1330. In FIG. 8, as shown in a process (3), while the pressure (P) remains constant, the enthalpy (h) decreases owing to the cooling of the CO₂ refrigerant. In consequence, the CO₂ refrigerant transits to the supercooled liquid.

The pressure reducing unit 1350 decreases the pressure of the refrigerant which has released the heat by the radiator 1340. In FIG. 8, as shown in a process (4), while the enthalpy (h) remains constant, the pressure (P) decreases. In consequence, the CO₂ refrigerant transits to the wet steam.

It is to be noted that FIG. 8 illustrates a case where the use environment temperature of the projection type image display apparatus 1100 is a comparatively low temperature. In a case where the use environment temperature of the projection type image display apparatus 1100 is a comparatively high temperature, a supercritical cycle is obtained in which the pressure of the process (3) to release the heat by the radiator 1340 is not lower than a critical pressure.

The refrigerant flow path 1360 is the flow path of the refrigerant. Specifically, the refrigerant flow path 1360 is a ring-like flow path extending through the heat absorber 1320, the compressor 1330, the radiator 1340 and the pressure reducing unit 1350.

The circulation fan 1370 circulates the air through the air flow path 1310. Specifically, the circulation fan 1370 feeds the air cooled by the heat absorber 1320 to an optical element side.

It is to be noted that the cooling apparatus 1300 may include a temperature sensor 1381 or 1382. The temperature sensor 1381 detects the temperature of the air flowing through the air flow path 1310. The temperature sensor 1382 detects the temperature of the heat absorber 1320 (the cooling section).

The temperature sensor 1381 which detects the temperature of the air flowing through the air flow path 1310 may be positioned at any position in the air flow path 1310. The temperature sensor 1381 is preferably positioned away from the outlet of the flow of the air passing through the heat absorber 1320 or the optical elements. The temperature of the air passing through the heat absorber 1320 and the optical elements noticeably varies, and hence at the outlets of them, the air temperature has a large unevenness. When the temperature sensor 1381 is disposed at these outlets, it is difficult to detect the average air temperature.

On the other hand, when the temperature sensor 1381 is disposed at these outlets, the air temperature is made uniform, and it is easy to detect the average air temperature.

In FIG. 7, the temperature sensor 1381 is disposed on a side where the air is sucked by the heat absorber 1320, but the temperature sensor 1381 is also preferably disposed on a side where the air is sucked into the optical elements.

The position of the temperature sensor 1382 which detects the temperature of the cooling section is preferably a position after an intermediate portion of the refrigerant flow path in the refrigerant flow path of the heat absorber 1320. In the refrigerant flow path of the heat absorber 1320, the temperature of the inlet of the refrigerant flow path has little relevance to the temperature of the air in the air flow path 1310 sometimes. Therefore, the inlet of the refrigerant flow path is not preferable as a position where the air temperature in the air flow path 1310 is indirectly detected by the temperature sensor 1382.

On the other hand, the temperature after the intermediate portion of the refrigerant flow path has comparatively large relevance to the air temperature in the air flow path 1310. Therefore, the position after the intermediate portion of the refrigerant flow path is preferable as a position where the air temperature in the air flow path 1310 is indirectly detected by the temperature sensor 1382.

### (Constitution of Control Unit)

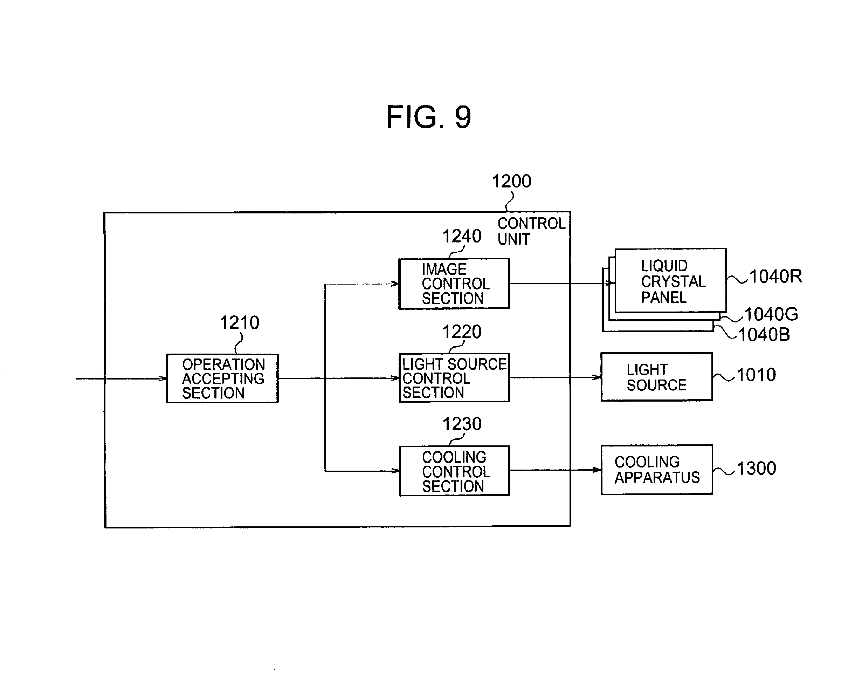

Hereinafter, a constitution of a control unit according to the first example will be described with reference to the drawings. FIG. 9 is a block diagram showing a control unit 1200 according to the first example.

It is to be noted that in the first example, the quantity of the light with which the liquid crystal panel 1040 (e.g., the entrance side polarizing plate 1041) is irradiated is set to a predetermined light quantity in a usual operation state. The usual operation state is a state where while the operation of the projection type image display apparatus 1100 is stabilized, the projection type image display apparatus 1100 projects the image light.

As shown in FIG. 9, the control unit 1200 includes an operation accepting section 1210, a light source control section 1220, a cooling control section 1230 and an image control section 1240.

The operation accepting section 1210 accepts an operating instruction from an operation I/F (not shown) or the like. The operating instruction includes, for example, an operation start instruction to instruct the operation start of the projection type image display apparatus 1100. Examples of the operation start instruction include the power source activating instruction of the projection type image display apparatus 1100 and the display start instruction of an image.

The light source control section 1220 controls the light source 1010 in accordance with the operation start instruction. Specifically, the light source control section 1220 controls a power to be supplied to the light source 1010. The light source control section 1220 may control the absolute amount of the power to be supplied to the light source 1010. The light source control section 1220 may control the power to be supplied to the light source 1010 in terms of pulses.

Here, when receiving the operation start instruction, the light source control section 1220 controls the power to be supplied to the light source 1010 so that the liquid crystal panel 1040 (i.e., the entrance side polarizing plate 1041) is irradiated with the light having a light quantity smaller than a predetermined light quantity. Specifically, the light source control section 1220 controls the power to be supplied to the light source 1010 so that the power smaller than a predetermined power is supplied to the light source 1010. It is to be noted that the predetermined power is a power necessary for irradiating the liquid crystal panel 1040 (i.e., the entrance side polarizing plate 1041) with the predetermined quantity of the light.

It is considered that examples of a control method of the power supplied to the light source 1010 include a control method for setting the power supplied to the light source 1010 to be the half of the predetermined power and a control method for setting the power supplied to the light source 1010 to be "0".

Hereinafter, such a period as to decrease the quantity of the light with which the liquid crystal panel 1040 (i.e., the entrance side polarizing plate 1041) is irradiated below a desirable light quantity is referred to as "the light quantity decrease period". Examples of the light quantity decrease period include (1) a period from when the operation start instruction is received until a predetermined time elapses, (2) a period from when the operation start instruction is received until the temperature detected by the temperature sensor 1381 (the temperature of the air flowing through the air flow path 1310) lowers below a predetermined temperature, and (3) a period from when the operation start instruction is received until the temperature detected by the temperature sensor 1382 (the temperature of the heat absorber 1320) lowers below a predetermined temperature.

The cooling control section 1230 controls the cooling apparatus 1300 in accordance with the operation start instruction. Here, when receiving the operation start instruction, the cooling control section 1230 immediately starts the operation of the cooling apparatus 1300. That is, when receiving the operation start instruction, the cooling apparatus 1300 immediately starts cooling the air flowing through the air flow path 1310.

The image control section 1240 controls the liquid crystal panel 1040 in accordance with the operation start instruction. For example, the image control section 1240 controls the image displayed in the liquid crystal panel 1040 based on image data stored in a DVD reproduction apparatus and an internal memory.

Here, in the light quantity decrease period, the image control section 1240 controls the liquid crystal panel 1040 so that all the light emitted from the light source 1010 is transmitted through the exit side polarizing plate 1042. That is, the image control section 1240 controls the liquid crystal panel 1040 so that a white image is displayed on a screen.

The image control section 1240 may control the liquid crystal panel 1040 so that only specific color component light among the red component light, the green component light and the blue component light is transmitted through the exit side polarizing plate 1042. For example, the image control section 1240 controls the liquid crystal panel 1040B so that the only blue component light having large light energy as compared with the other color component light is transmitted through the exit side polarizing plate 1042B.

### (Cooling of Optical Element)

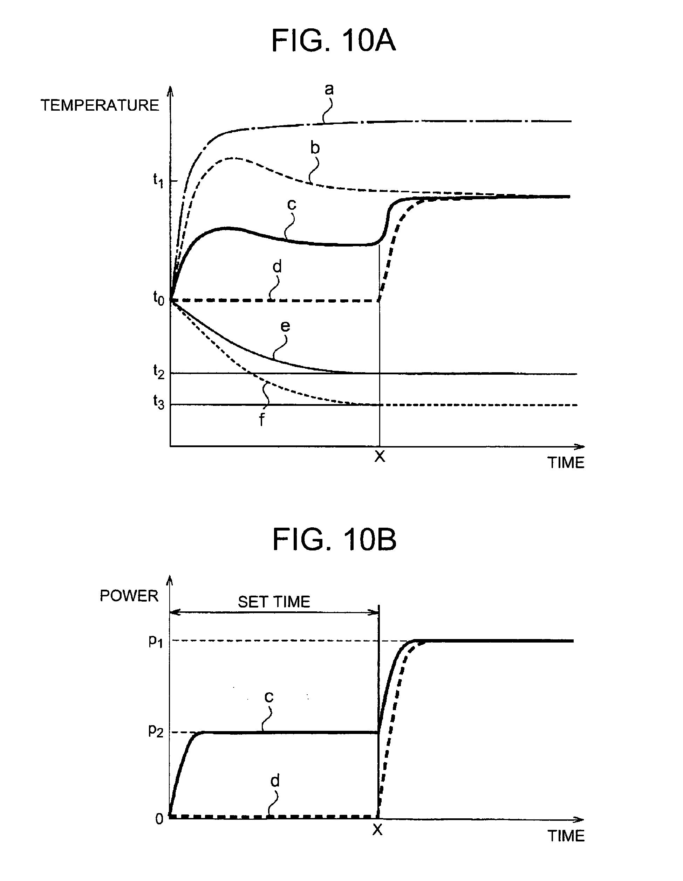

Hereinafter, the cooling of the optical elements as the cooling targets according to the first example will be described with reference to the drawings. FIGS. 10(a) and 10(b) are diagrams for explaining the cooling of the optical elements as the cooling targets according to the first example. It is to be noted that the optical elements as the cooling targets are the liquid crystal panel 1040, the entrance side polarizing plate 1041, the exit side polarizing plate 1042 and an optical compensation plate (not shown) as described above.

In FIG. 10(a), the ordinate indicates the temperatures of the optical elements as the cooling targets and the like, and the abscissa indicates a time elapsed from the operation start instruction. A temperature t0 is room temperature. A temperature t1 is the upper limit of the range of the operation temperatures allowed for the optical elements as the cooling targets (hereinafter referred to as the allowable temperature range).

In FIG. 10(b), the ordinate indicates the power supplied to the light source 1010, and the abscissa indicates a time elapsed from the operation start instruction. A power P1 is a predetermined power necessary for irradiating the liquid crystal panel 1040 (i.e., the entrance side polarizing plate 1041) with the predetermined light quantity of the light. A power P2 is the half of the predetermined power.

Here, in FIG. 10(a), a curve a indicates a case where the cooling apparatus 1300 is not operated. Curves b to d indicate a case where the cooling apparatus 1300 is operated. The curve b indicates a case where the predetermined power is supplied to the light source 1010.

The curve c indicates a case where the power which is the half of the predetermined power is supplied to the light source 1010 from when the operation start instruction is received until a time X elapses (see the curve c in FIG. 10(b)). The curve d indicates a case where any power is not supplied to the light source 1010 from when the operation start instruction is received until the time X elapses (see the curve d in FIG. 10(b)).

A curve e indicates the temperature of the air flowing through the air flow path 1310. That is, the curve e indicates the temperature detected by the temperature sensor 1381. A curve f indicates the temperature of the heat absorber 1320. That is, the curve f indicates the temperature detected by the temperature sensor 1382.

As shown by the curves a to d, in the curves a and b, the temperatures of the optical elements as the cooling targets exceed the upper limit (the temperature t1) of the allowable temperature range. Especially in the curve b, although the cooling apparatus 1300 is operated, the temperatures of the optical elements exceed the upper limit (the temperature t1) of the allowable temperature range.

On the other hand, the temperatures of the optical elements as the cooling targets do not exceed the upper limit (the temperature t1) of the allowable temperature range in the curves c and d.

Here, it is considered that the light quantity decrease period is the period of the above (1) to (3). The predetermined time and the predetermined temperature are obtained by beforehand measuring the temperature variance shown in FIG. 10(a) and determined so that the temperatures of the optical elements do not exceed the upper limit (the temperature t1) of the allowable temperature range.

Specifically, in a case where the period (1) is used as the light quantity decrease period, the predetermined time is the time X. In a case where the period (2) is used as the light quantity decrease period, the predetermined temperature is a temperature t2. In a case where the period (3) is used as the light quantity decrease period, the predetermined temperature is a temperature t3.

### (Function and Effect)

In the first example, when receiving the operation start instruction, the cooling apparatus 1300 (the heat absorber 1320) starts cooling the air flowing through the air flow path 1310. When receiving the operation start instruction, the light source control section 1220 controls the power to be supplied to the light source 1010 so that the power smaller than the predetermined power is supplied to the light source 1010. Therefore, the temperatures of the optical elements as the cooling targets can be prevented from exceeding the upper limit of the allowable temperature range from when the operation start instruction is received until a usual operation state is reached.

In the first example, the light source control section 1220 controls the power to be supplied to the light source 1010 so that the power smaller than the predetermined power is supplied to the light source 1010 in the light quantity decrease period. The examples of the light quantity decrease period include (1) the period from when the operation start instruction is received until the predetermined time elapses, (2) the period from when the operation start instruction is received until the temperature detected by the temperature sensor 1381 lowers below the predetermined temperature, and (3) the period from when the operation start instruction is received until the temperature detected by the temperature sensor 1382 lowers below the predetermined temperature. Therefore, while preventing the temperatures of the optical elements as the cooling targets from exceeding the upper limit of the allowable temperature range, the liquid crystal panel 1040 (i.e., the entrance side polarizing plate 1041) can be irradiated with the predetermined light quantity of the light at an appropriate timing.

In the first example, the image control section 1240 controls the liquid crystal panel 1040 so that all the light emitted from the light source 1010 is transmitted through the exit side polarizing plate 1042 in the light quantity decrease period. Therefore, it is possible to suppress the temperature rise of the exit side polarizing plate 1042 due to the blocking of the light.

In the first example, the image control section 1240 controls the liquid crystal panel 1040B so that the only blue component light having large light energy as compared with the other color component light is transmitted through the exit side polarizing plate 1042B in the light quantity decrease period. It is possible to suppress the damage to the exit side polarizing plate 1042B due to the blocking of the light.

### [Second Example]

Hereinafter, a second example will be described with reference to the drawings. Hereinafter, a difference between the first example and the second example will mainly be described.

Specifically, in the first example, the light quantity with which the optical element as the cooling target is irradiated is controlled by the power to be supplied to the light source 1010. On the other hand, in the second example, the light quantity with which the optical element as the cooling target is irradiated is controlled by a light quantity limiting section constituted of a light blocking member.

### (Constitution of Projection Type Image Display Apparatus)

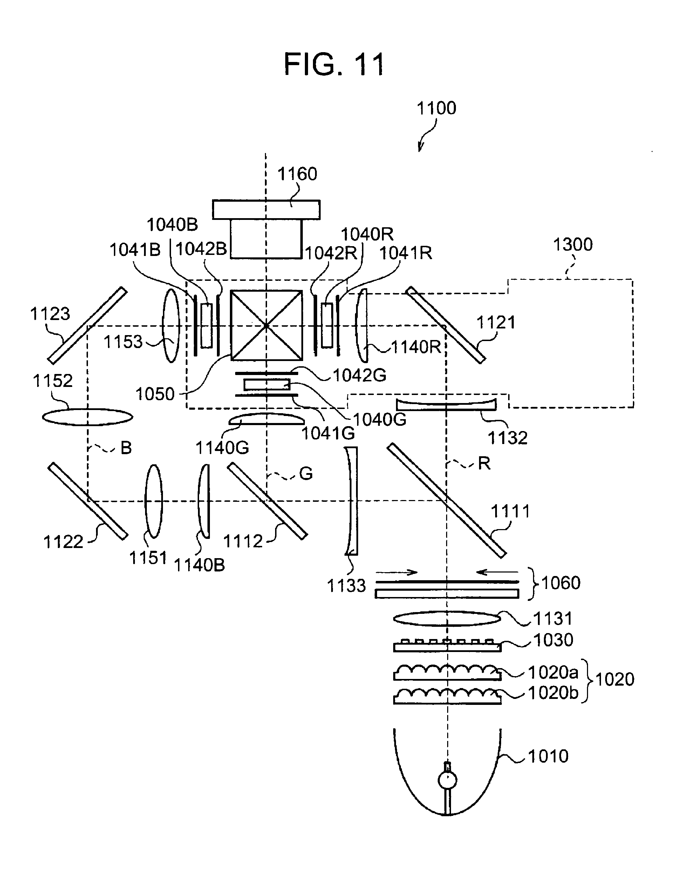

Hereinafter, a constitution of a projection type image display apparatus according to the second example will be described with reference to the drawings. FIG. 11 is a diagram showing a projection type image display apparatus 1100 according to the second example. In FIG. 11, a constitution similar to FIG. 6 is denoted with similar reference numerals.

As shown in FIG. 11, the projection type image display apparatus 1100 includes a light quantity limiting section 1060 in addition to the constitution shown in FIG. 6.

The light quantity limiting section 1060 is interposed between a light source 1010 and a liquid crystal panel 1040. The light quantity limiting section 1060 is constituted of a light blocking member. The light quantity limiting section 1060 is configured to vary the blocking quantity (the limiting quantity) of the light emitted from the light source 1010. The light quantity limiting section 1060 is constituted of, for example, a shutter and the like. In consequence, the light quantity limiting section 1060 regulates the quantity of the light with which the liquid crystal panel 1040 (i.e., an entrance side polarizing plate 1041) is irradiated.

### (Constitution of Control Unit)

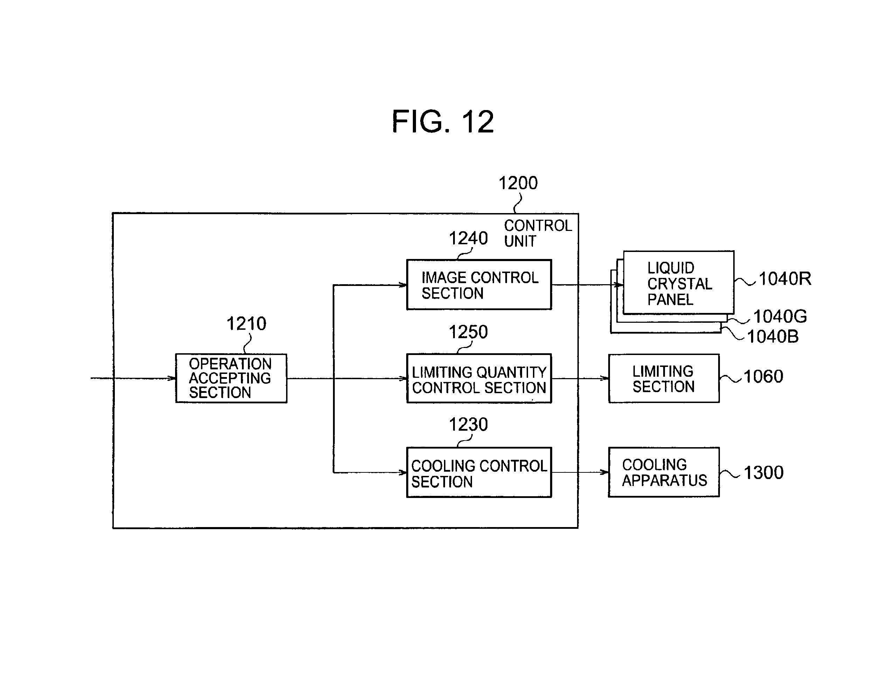

Hereinafter, a constitution of a control unit according to the second example will be described with reference to the drawings. FIG. 12 is a block diagram showing a control unit 1200 according to the second example. In FIG. 12, a constitution similar to FIG. 9 is denoted with similar reference numerals.

As shown in FIG. 12, the 1200 includes a limiting quantity control section 1250 in place of the light source control section 1220.

The limiting quantity control section 1250 controls the light quantity limiting section 1060 in accordance with an operation start instruction. Specifically, the limiting quantity control section 1250 controls the blocking quantity (the limiting quantity) of the light emitted from the light source 1010.

Here, when receiving the operation start instruction, the limiting quantity control section 1250 controls the limiting quantity of the light quantity limiting section 1060 so that the liquid crystal panel 1040 (i.e., the entrance side polarizing plate 1041) is irradiated with light having a light quantity smaller than a predetermined light quantity. Specifically, the limiting quantity control section 1250 controls the limiting quantity of the light quantity limiting section 1060 so that the limiting quantity of the light emitted from the light source 1010 is larger than a predetermined limiting quantity. It is to be noted that the predetermined limiting quantity is such a limiting quantity as to irradiate the liquid crystal panel 1040 (i.e., the entrance side polarizing plate 1041) with the predetermined light quantity of the light. Moreover, the predetermined limiting quantity may be "0".

It is considered that examples of a control method of the limiting quantity of the light quantity limiting section 1060 include a method for blocking the half of the light emitted from the light source 1010 and a method for blocking all the light emitted from the light source 1010.

### (Function and Effect)

In the second example, when receiving the operation start instruction, a cooling apparatus 1300 (a heat absorber 1320) starts cooling air flowing through an air flow path 1310. When receiving the operation start instruction, the limiting quantity control section 1250 controls the limiting quantity of the light quantity limiting section 1060 so that the limiting quantity of the light emitted from the light source 1010 is larger than the predetermined limiting quantity. Therefore, in the same manner as in the first example, it is possible to prevent the temperatures of the optical elements as the cooling targets from exceeding the upper limit of the allowable temperature range from when the operation start instruction is received until a usual operation state is reached.

### [Third Example]

Hereinafter, a third example will be described with reference to the drawings. Hereinafter, a difference between the first example and the third example will mainly be described.

Specifically, in the first example, the projection type image display apparatus 1100 includes a single light source 1010. On the other hand, in the third example, the projection type image display apparatus 1100 includes a plurality of light sources 1010.

### (Constitution of Projection Type Image Display Apparatus)

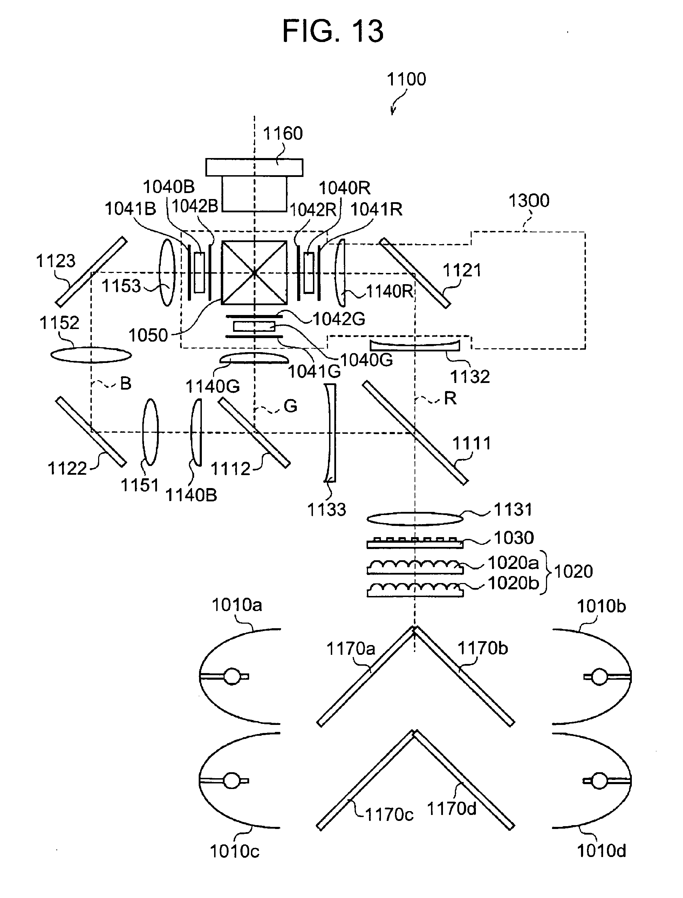

Hereinafter, a constitution of the projection type image display apparatus according to the third example will be described with reference to the drawings. FIG. 13 is a diagram showing the projection type image display apparatus 1100 according to the third example. In FIG. 13, a constitution similar to FIG. 6 is denoted with similar reference numerals.

As shown in FIG. 13, the projection type image display apparatus 1100 includes a plurality of light sources 1010 (light sources 1010a to 1010d). Moreover, the projection type image display apparatus 1100 includes a plurality of reflective mirrors 1170 (reflective mirrors 1170a to 1170d) in addition to the constitution shown in FIG. 6.

The light sources 1010a to 1010d are UHP lamps which emit white light or the like in the same manner as in the above light source 1010. The reflective mirrors 1170a to 1170d reflect light emitted from the light sources 1010a to 1010d to a fly eye lens unit 1020 side, respectively.

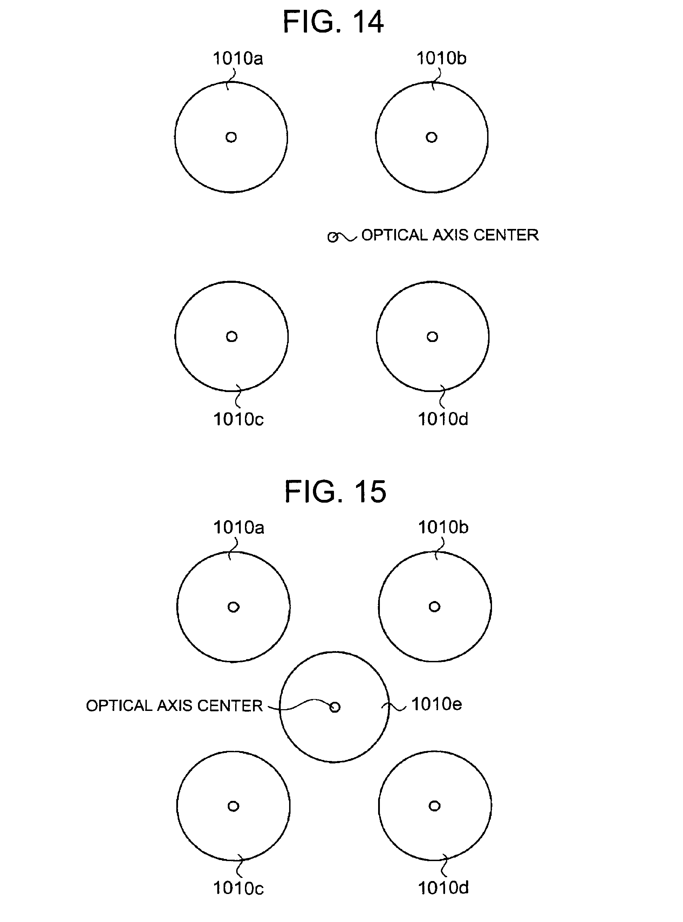

FIG. 14 is an image diagram showing the arrangement of the light sources 1010a to 1010d according to the third example. FIG. 14 shows the arrangement of the light emitted from the light sources 1010a to 1010d, when the light is reflected by the reflective mirrors 1170a to 1170d. As shown in FIG. 14, the light emitted from the light sources 1010a to 1010d is disposed around the center of an optical axis.

Here, the above light source control section 1220 controls the number of the lit light sources 1010 in a light quantity decrease period. It is to be noted that in the third example, a predetermined light quantity in a usual operation state is the light quantity of the light emitted from all of the light sources 1010a to 1010d.

Specifically, when receiving the operation start instruction, the light source control section 1220 starts supplying the power to the light sources 1010 of a part of the plurality of light sources 1010, and reserves the start of the supply of the power to the light sources 1010 of the other part. That is, the light source control section 1220 decreases the number of the lit light sources 1010 in the light quantity decrease period. For example, the light source control section 1220 lights only two light sources 1010, and reserves the lighting of the other light sources 1010 in the light quantity decrease period.

In this way, the light source control section 1220 controls the light sources so that the optical element as the cooling target is irradiated with the light emitted from the light sources 1010 of the part temporally behind the light emitted from the light sources 1010 of the other part.

Here, the light sources 1010 to be lit in the light quantity decrease period is preferably point-symmetric with respect to the center of the optical axis. For example, the light source control section 1220 lights the light sources 1010a and 1010d, and reserves the lighting of the light sources 1010b and 1010c. Alternatively, the light source control section 1220 lights the light sources 1010b and 1010c, and reserves the lighting of the light sources 1010a and 1010d.

Moreover, the light quantity emitted from the light sources 1010 of the part is preferably symmetric with respect to the light quantity emitted from the light sources 1010 of the other part.

### (Function and Effect)

According to the third example, when receiving the operation start instruction, the light source control section 1220 starts supplying the power to the light sources 1010 of a part of a plurality of light sources 1010, and reserves the start of the supply of the power to the light sources 1010 of the other part. Therefore, in the same manner as in the first example, it is possible to prevent the temperatures of the optical elements as the cooling targets from exceeding the upper limit of the allowable temperature range from when the operation start instruction is received until the usual operation state is reached.

Moreover, the light sources 1010 to be lit in the light quantity decrease period are point-symmetric with respect to the center of the optical axis. Therefore, color unevenness generated on a screen can be suppressed in the light quantity decrease period.

### [Modification of Third Example]

Hereinafter, a modification of the third example will be described with reference to FIG. 15. In the modification of the third example, a projection type image display apparatus 1100 includes a plurality of light sources 1010 (light sources 1010a to 1010e). FIG. 15 is an image diagram showing the arrangement of the light sources 1010a to 1010e according to the modification of the third example.

In such a case, as the order of the light sources 1010a to 1010e to be lit, an order is considered as follows.

### (1) Case of Display in 2 Stages

In a first stage, a light source control section 1220 lights the light sources 1010a, 1010d and 1010e. In a second stage, the light source control section 1220 lights the light sources 1010b and 1010c.

Alternatively, in the first stage, the light source control section 1220 lights the light sources 1010b, 1010c and 1010e. In the second stage, the light source control section 1220 lights the light sources 1010a and 1010d.

### (2) Case of Display in 3 Stages

In a first stage, the light source control section 1220 lights the light source 1010e. In a second stage, the light source control section 1220 lights the light sources 1010a and 1010d. In a third stage, the light source control section 1220 lights the light sources 1010b and 1010c.

Alternatively, in the first stage, the light source control section 1220 lights the light source 1010e. In the second stage, the light source control section 1220 lights the light sources 1010b and 1010c. In the third stage, the light source control section 1220 lights the light sources 1010a and 1010d.

It is to be noted that the first and second stages or the first and third stages may be replaced.

### [Fourth Example]

Hereinafter, a fourth example will be described with reference to the drawings. The fourth example is an example obtained by combining the second and third examples.

### (Constitution of Projection Type Image Display Apparatus)

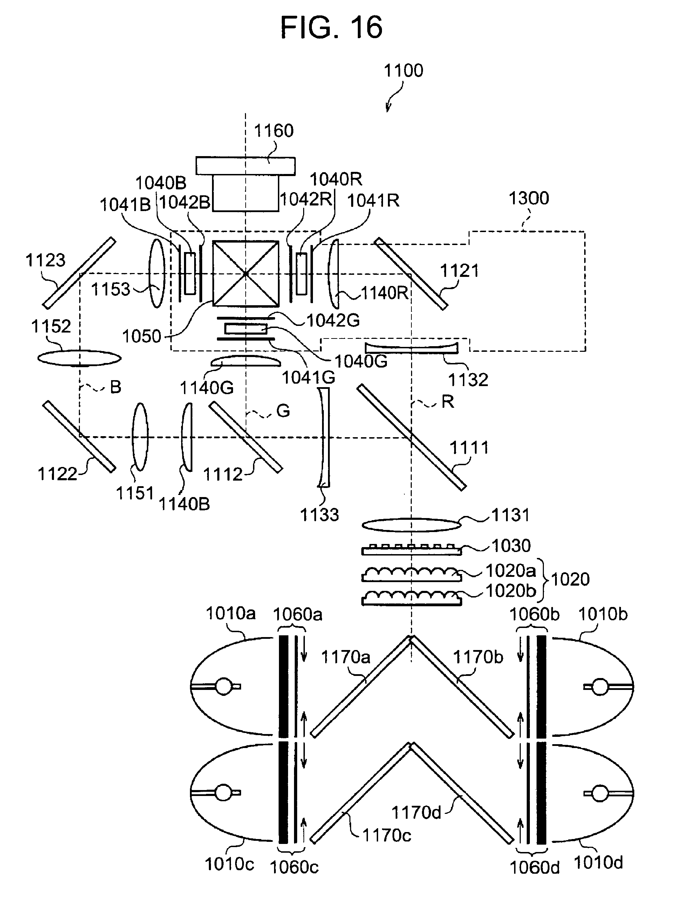

Hereinafter, a constitution of a projection type image display apparatus according to the fourth example will be described with reference to the drawings. FIG. 16 is a diagram showing a projection type image display apparatus 1100 according to the fourth example. It is to be noted that in FIG. 16, a constitution similar to FIGS. 6, 11 and 13 is denoted with similar reference numerals.

As shown in FIG. 16, the projection type image display apparatus 1100 includes a plurality of light quantity limiting sections 1060 (light quantity limiting sections 1060a to 1060d).

The light quantity limiting sections 1060a to 1060d are disposed on the light exit sides of light sources 1010a to 1010d, respectively. The light quantity limiting sections 1060a to 1060d are constituted of light blocking members in the same manner as in the above light quantity limiting section 1060. The light quantity limiting sections 1060a to 1060d are configured to vary the blocking quantity (the limiting quantity) of the light emitted from the light sources 1010a to 1010d, respectively.

Here, the above limiting quantity control section 1250 controls the limiting quantities of the light quantity limiting sections 1060a to 1060d in a light quantity decrease period. It is to be noted that in the fourth example, a predetermined light quantity in a usual operation state is the light quantity of the light emitted from all of the light sources 1010a to 1010d.

Specifically, when receiving an operation start instruction, the limiting quantity control section 1250 does not block the light emitted from the light sources 1010 of a part of the plurality of light sources 1010, but blocks all the light emitted from the light sources 1010 of the other part. That is, the limiting quantity control section 1250 allows the only light emitted from the light sources 1010 of the part to reach a liquid crystal panel 1040 in the light quantity decrease period. For example, the limiting quantity control section 1250 allows the light emitted from the two light sources 1010 to reach the liquid crystal panel 1040, and does not allow the light emitted from the other light sources 1010 to reach the liquid crystal panel 1040 in the light quantity decrease period.

In the light quantity decrease period, the light sources 1010 which emit the light reaching the liquid crystal panel 1040 are point-symmetric with respect to the center of an optical axis in the same manner as in the third example.

### (Function and Effect)

In the fourth example, when receiving the operation start instruction, the limiting quantity control section 1250 does not block the light emitted from the light sources 1010 of a part of the plurality of light sources 1010, but blocks all the light emitted from the light sources 1010 of the other part. Therefore, the temperatures of optical elements as cooling targets can be prevented from exceeding the upper limit of an allowable temperature range from when the operation start instruction is received until the usual operation state is reached.

Moreover, the light sources 1010 which emit the light reaching the liquid crystal panel 1040 are point-symmetric with respect to the center of the optical axis in the light quantity decrease period. Therefore, color unevenness generated on a screen can be suppressed in the light quantity decrease period.

### [Fifth Example]

Hereinafter, a fifth example will be described with reference to the drawings. Hereinafter, a difference between the first example and the fifth example will be described.

In the first example, the liquid crystal panel is used as a light modulation element, and the optical elements as the cooling targets are the liquid crystal panel 1040, the entrance side polarizing plate 1041 and the exit side polarizing plate 1042.

On the other hand, in the fifth example, a two-dimensional scanning mirror is used as the light modulation element, and an optical element as a cooling target is a two-dimensional scanning mirror.

### (Constitution of Projection Type Image Display Apparatus)

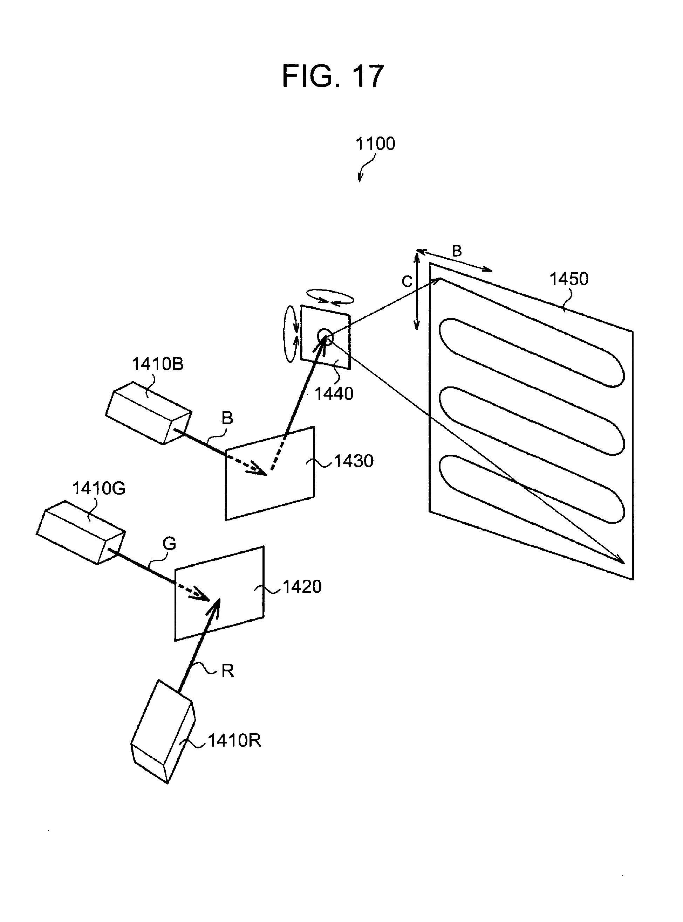

Hereinafter, a constitution of a projection type image display apparatus according to the fifth example will be described with reference to the drawings. FIG. 17 is a diagram showing a projection type image display apparatus 1100 according to the fifth example.

As shown in FIG. 17, the projection type image display apparatus 1100 includes a red light source 1410R, a green light source 1410G, a blue light source 1410B, a dichroic mirror 1420, a dichroic mirror 1430 and a two-dimensional scanning mirror 1440.

The red light source 1410R is a laser light source which emits red component light. The green light source 1410G is a laser light source which emits green component light. The blue light source 1410B is a laser light source which emits blue component light.

The dichroic mirror 1420 transmits the red component light emitted from the red light source 1410R, and reflects the green component light emitted from the green light source 1410G.

The dichroic mirror 1430 transmits the red component light and green component light emitted from the dichroic mirror 1420, and reflects the blue component light emitted from the blue light source 1410B.

That is, the dichroic mirrors 1420 and 1430 synthesize the red component light, the green component light and the blue component light.

The two-dimensional scanning mirror 1440 scans the synthesized light (the image light) emitted from the dichroic mirror 1430 on a screen 1450. Specifically, the two-dimensional scanning mirror 1440 performs an operation of scanning the synthesized light (the image light) in a B-direction (a horizontal direction) on the screen 1450 (horizontal scanning). Moreover, the two-dimensional scanning mirror 1440 repeats the horizontal scanning along a C-direction (a vertical direction).

In the fifth example, the two-dimensional scanning mirror 1440 is disposed in an air flow path 1310 of a cooling apparatus 1300. That is, the two-dimensional scanning mirror 1440 is the optical element as the cooling target.

### [Sixth Example]

Hereinafter, a sixth example will be described with reference to the drawings. Hereinafter, a difference between the first example and the sixth example will be described.

In the first example, the liquid crystal panel is used as the light modulation element, and the optical elements as the cooling targets are a liquid crystal panel 1040, an entrance side polarizing plate 1041 and an exit side polarizing plate 1042.

On the other hand, in the sixth example, a one-dimensional scanning mirror is used as a light modulation element, and an optical element as a cooling target is the one-dimensional scanning mirror.

### (Constitution of Projection Type Image Display Apparatus)

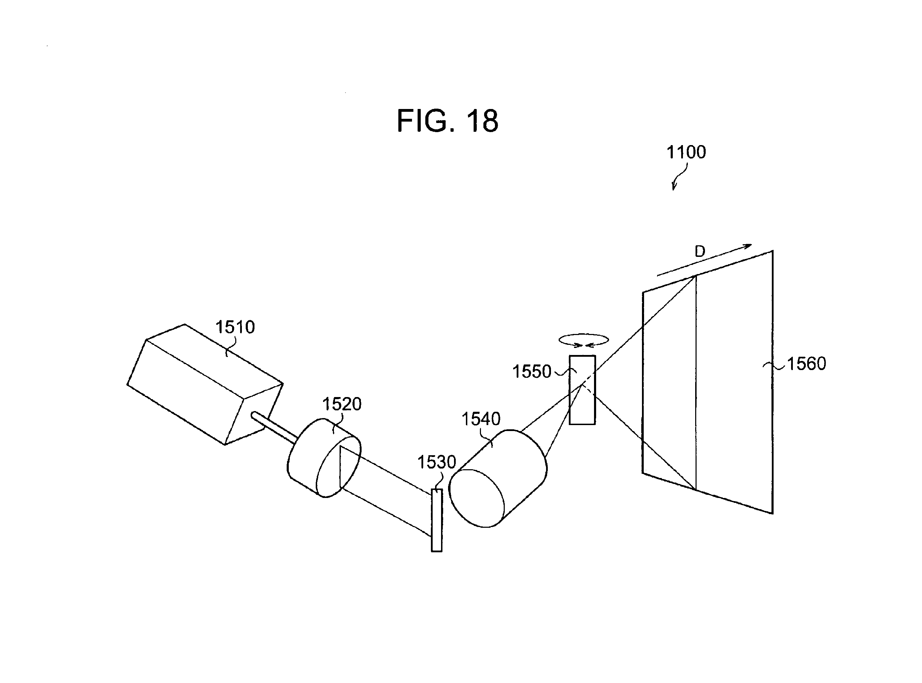

Hereinafter, a constitution of a projection type image display apparatus according to the sixth example will be described with reference to the drawings. FIG. 18 is a diagram showing a projection type image display apparatus 1100 according to the sixth example.

As shown in FIG. 18, the projection type image display apparatus 1100 includes a light source 1510, a lens 1520, a linear optical element 1530, a lens 1540 and a one-dimensional scanning mirror 1550.

The light source 1510 is a laser light source which emits laser light. The lens 1520 condenses the laser light emitted from the light source 1510 on the linear optical element 1530.

The linear optical element 1530 has a linear shape, and modulates the laser light emitted from the light source 1510. The lens 1540 condenses the linear light emitted from the linear optical element 1530 on the one-dimensional scanning mirror 1550.

The one-dimensional scanning mirror 1550 scans the linear light emitted from the linear optical element 1530 on a screen 1560. Specifically, the one-dimensional scanning mirror 1550 scans the linear light in a D-direction (the horizontal direction) on the screen 1560.

In the sixth example, the one-dimensional scanning mirror 1550 is disposed in an air flow path 1310 of a cooling apparatus 1300. That is, the one-dimensional scanning mirror 1550 is an optical element as a cooling target.

It is to be noted that the projection type image display apparatus 1100 may include the light source 1510, the lens 1520, the linear optical element 1530, the lens 1540 and the one-dimensional scanning mirror 1550 for each of red, green and blue. In such a case, color component beams are superimposed on the screen 1560 to form an image on the screen 1560.

### [Another Example]

The present invention has been described with respect to the above examples, but it should not be understood that description and drawings constituting a part of this disclosure limit this invention. Alternative examples, embodiments and operation techniques will be obvious for a person with ordinary skill from this disclosure.

For example, the temperature sensor 1382 may detect the temperature of a refrigerant flowing through the refrigerant flow path 1360. The light quantity decrease period may be a period from when the operation start instruction is received until the temperature detected by the temperature sensor 1382 (the temperature of the refrigerant) lowers below a predetermined temperature.

The air flow path 1310 is preferably a sealed flow path, although not especially mentioned in the above examples.

In the above examples, the cooling apparatus 1300 is constituted of the heat absorber 1320, the compressor 1330, the radiator 1340, the pressure reducing unit 1350 and the like. However, the constitution of the cooling apparatus 1300 is not limited to this example. The cooling apparatus 1300 may include Peltier element as a cooling section which cools the air flowing through the air flow path 1310.

Moreover, the present invention relates to a projector, and is mainly **characterized in that** when cold air cooled by cooling means is supplied to an optical element group to release heat, dew is prevented from being condensed on the inner and outer surfaces of a duct (the air circulation duct) through which the cold air circulates. A purpose of preventing the dew condensation on the inner and outer surfaces of the duct is realized by a simple constitution in which heating means is only disposed in the duct.

### Embodiment 5

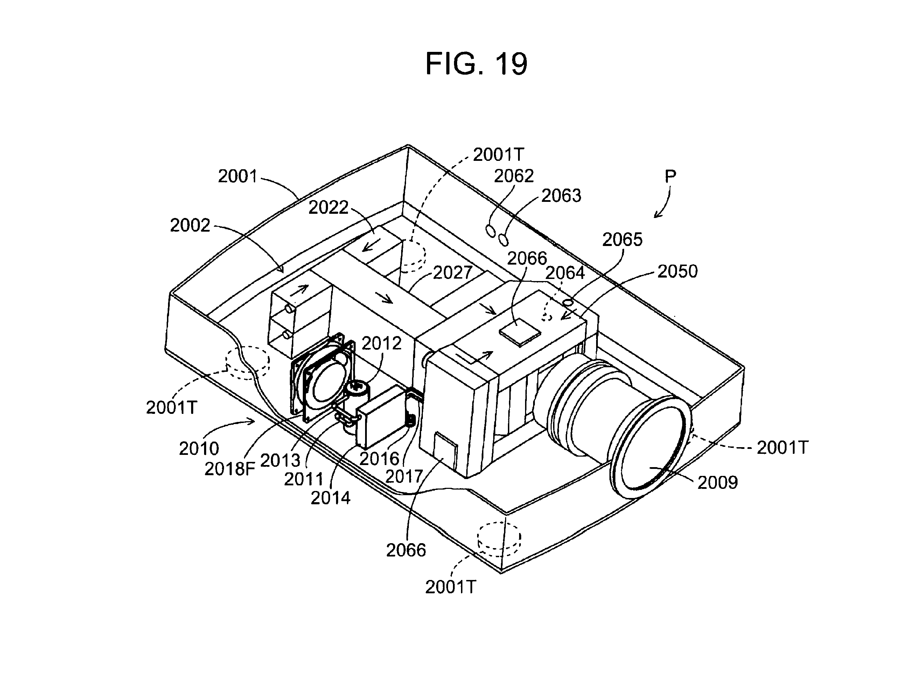

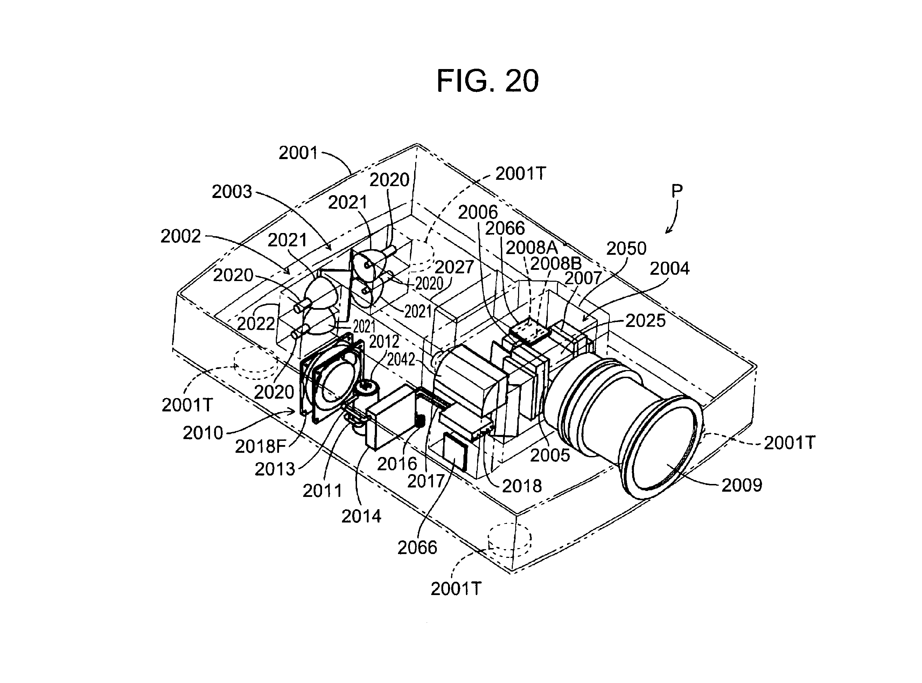

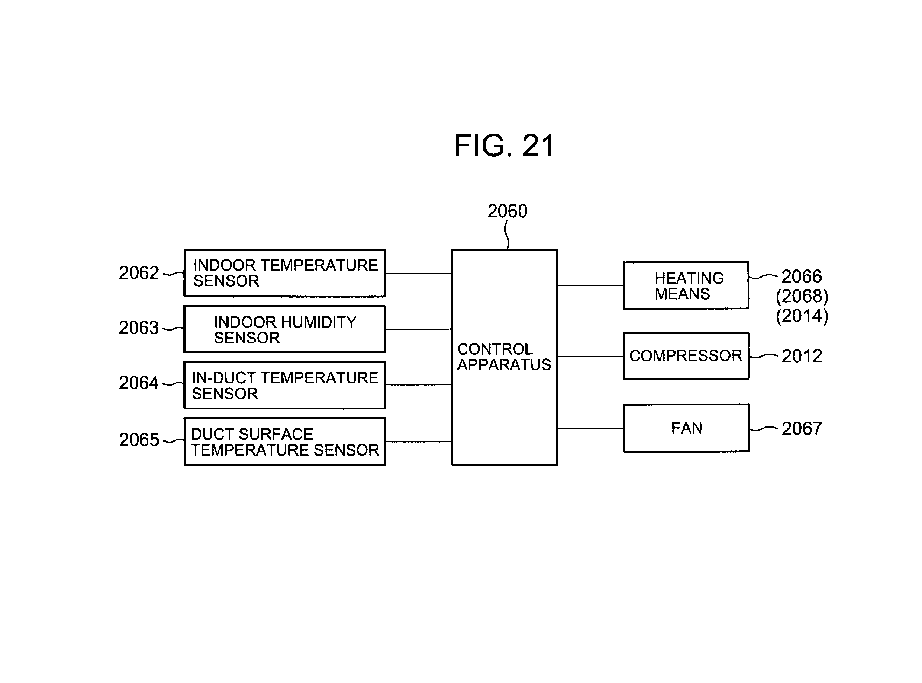

Next, an example of Embodiment 5 of the present invention will be described in detail with reference to the drawings. FIG. 19 is a perspective view of a liquid crystal projector P (an upper surface opening and a partial cutout) showing one embodiment of the present invention in this case, FIG. 20 is an inner constitution diagram of the liquid crystal projector P showing the embodiment of FIG. 19, and FIG. 21 is a block diagram of a control apparatus 2060 of the liquid crystal projector P showing the embodiment of the present invention, respectively.

As shown in FIGS. 19 and 20, the liquid crystal projector P in the present embodiment (corresponding to the projector of the present invention) includes a light source 2002 disposed in a main body 2001, a uniform illumination optical system 2003, a color splitting optical system (not shown), an optical element group 2004 described later, a projection lens 2009 and cooling means described later. It is to be noted that to explain devices disposed in the main body 2001 in FIGS. 19 and 20, the upside of the main body 2001 is opened (in FIG. 19, a part of the main body 2001 is cut).

The light source 2002 is constituted of lamps 2020 such as super high pressure mercury lamps and reflectors 2021 which emit light diverging from the lamps 2020 (the diverging light) forwards (FIG. 20). In the light source 2002 of the embodiment, the reflectors 2021 are attached to a plurality of (four) lamps 2020 .., respectively, and are received in a lamp box 2022 disposed in the main body 2001.

The uniform illumination optical system 2003 forms the light emitted from the light source 2002 into a light flux having a uniform luminance distribution, and is constituted of an integrator lens, a condensing lens, a total reflection mirror and the like (not shown). Moreover, the color splitting optical system splits the light flux from the uniform illumination optical system 2003 into beams of red (R), green (G) and blue (B), and is constituted of dichroic mirrors (not shown) which split the light flux from the uniform illumination optical system 2003 into the respective color beams, reflective mirrors which guide the respective split color beams to the optical element group 2004 and the like.

The optical element group 2004 is constituted of three liquid crystal panels (LCD panels) 2005, 2006 and 2007, polarizing plates 2008A arranged with predetermined spaces on the entrance sides of the liquid crystal panels 2005, 2006 and 2007, polarizing plates 2008B arranged with predetermined spaces on the exit sides of the liquid crystal panels 2005, 2006 and 2007, a prism 2025 and the like. The liquid crystal panels 2005, 2006 and 2007 process (modulate) the light split by the color splitting optical system and guided to the liquid crystal panels 2005, 2006 and 2007 in accordance with image information. Moreover, the prism 2025 synthesizes the respective color beams to form a projection light image.

The prism 2025 has a reflective surface constituted of an X-shaped dielectric multilayered film, and the beams from the liquid crystal panels 2005, 2006 and 2007 are formed as a single light flux through the reflective surface. The projection lens 2009 enlarges and projects the projection light image from the prism 2025 onto a screen, and is detachably disposed in a hole (not shown) formed in the wall surface of the main body 2001. Moreover, 2027 is a housing which covers an optical path for guiding the light emitted from the light source 2002 to the liquid crystal panels 2005, 2006 and 2007, the polarizing plates 2008A and 2008B and the like. That is, the path through which the light passes from the light source 2002 to the polarizing plates 2008A on the entrance sides of the liquid crystal panels 2005, 2006 and 2007 (the optical path) is formed in the housing 2027. It is to be noted that 2001T are foot portions disposed near the four corners of the bottom portion of the main body 2001, and 2018F is a heat release fan.

An operation of the above constitution will be described. As shown by arrows in FIG. 19, the light emitted from the light source 2002 is formed into the light flux having the uniform luminance distribution by the uniform illumination optical system 2003, and split into the respective beams of the colors R, G and B in the color splitting optical system. The split beams (R, G and B) are guided to the liquid crystal panels 2005, 2006 and 2007 which function as corresponding light bulbs via the polarizing plates 2008A on the entrance side. The beams (R, G and B) guided to the liquid crystal panels 2005, 2006 and 2007 are modulated in accordance with the image information in the panels, formed into the projection image of the single light flux by the prism 2025 through the polarizing plates 2008B on the exit side, and then enlarged and projected onto a screen by the projection lens 2009. Hereinafter, for the convenience of description, the three liquid crystal panels (LCD panels) 2005, 2006 and 2007, the polarizing plates 2008A and 2008B, the prism 2025 and the like will be referred to as the optical element group 2004.

Next, the cooling means will be described. The cooling means is constituted of a cooling apparatus 2010 in which a compressor 2012, a radiator 2014 and an evaporator 2018 (the cooler) are connected via piping. The cooling apparatus 2010 cools the optical element group 2004, and the compressor 2012, the radiator 2014, a capillary tube 2016 and the evaporator 2018 constitute a refrigerant circuit. Specifically, in the cooling apparatus 2010, a refrigerant discharge tube 2013 on the outlet side of the compressor 2012 is connected to the inlet of the radiator 2014, and the outlet of the radiator 2014 is connected to the inlet of the evaporator 2018 via the capillary tube 2016 (corresponding to a pressure reducing unit of the present invention) and a refrigerant pipe 2017. It is to be noted that it has been described above that the cooling apparatus 2010 cools the optical element group 2004, but actually the periphery of the optical element group 2004, a polarizing beam splitter (PBS) and the like are also cooled. Moreover, the radiator 2014 is disposed on the high temperature side of the refrigerant circuit, and the evaporator 2018 is disposed on the low temperature side of the refrigerant circuit.

The outlet of the evaporator 2018 is connected to a refrigerant introduction pipe 2011 of the compressor 2012 to constitute the ring-like refrigerant circuit. Moreover, the heat release fan 2018F, the compressor 2012 and the radiator 2014 are successively arranged in the main body 2001, the heat release fan 2018F is disposed in the vicinity of the light source 2002, and the radiator 2014 is disposed in the vicinity of a duct 2050. Furthermore, in the present embodiment, the capillary tube 2016 is used as the pressure reducing unit which decreases the pressure of the refrigerant, but the pressure reducing unit is not limited to the capillary tube 2016, and any unit may be used as long as the pressure of the refrigerant can be decreased to a predetermined pressure. For example, an expansion valve may be used.

Moreover, in the wall surface of the main body 2001, although not shown, two air holes which connect the inside of the main body 2001 to the outside are disposed at predetermined positions, and ventilation fans are attached to the air holes. Furthermore, when the ventilation fans are operated, outside air is sucked into the main body 2001 through one air hole, and the sucked outside air cools the compressor 2012, the radiator 2014 and the like, cools the light source 2002, and is then discharged to the outside of the main body 2001 through the other air hole.

At this time, the light source 2002 has a temperature which is as high as about +900°C, as described above in the related art, and hence even the air passed through the radiator 2014 and heated by the refrigerant has a temperature remarkably lower than the temperature of the light source 2002, whereby the heat can sufficiently be released by the outside air passed through the radiator 2014. The air heated to the high temperature in the light source 2002 is then discharged to the outside of the main body 2001 through the other air hole.

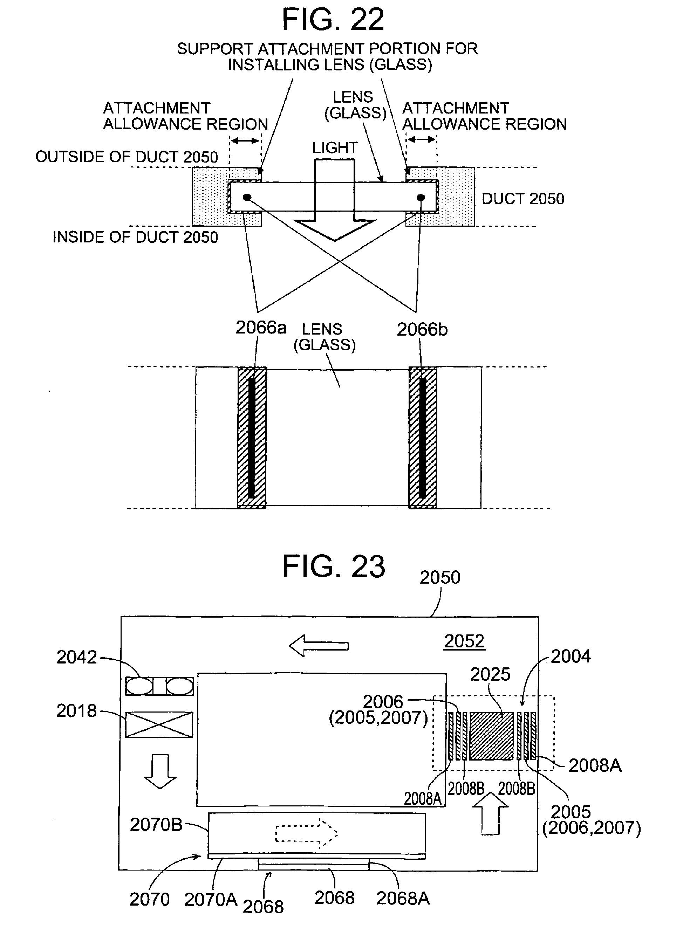

On the other hand, the duct 2050 is disposed around the optical element group 2004. The duct 2050 surrounds the periphery of the optical element group 2004, and a cooling air path 2052 is formed in the duct 2050 (shown in FIG. 23). That is, in the liquid crystal projector P, the optical element group 2004 is disposed in the cooling air path 2052 formed in the duct 2050, and the inside of the duct 2050 is kept at about +10°C (a set temperature) by the cold air (a white arrow in FIG. 23) circulated by a cold air circulating fan 2042 described later. It is to be noted that the optical element group 2004 has a temperature of +50°C to +60°C below the upper limit of +70°C to +80°C of the use temperatures irrespective of an outside air temperature.

A part of the duct 2050 is provided with a cross surface constituted of a light transmitting material such as a lens or glass so that the light passes in a direction substantially perpendicular to the duct, and the other part thereof is constituted of a plate-like metal material having a satisfactory heat conductivity (e.g., an aluminum plate or a metal plate such as a steel plate). In the duct 2050 having such a constitution, an optical path needs to cross the duct (the air duct), and at least one outlet of the optical path from the air duct and at least one inlet of the optical path to the air duct are necessary. However, at present, one inlet is disposed for each of beams (R, G and B), i.e., three inlets in total are disposed, and one outlet of a single light flux from the prism 2025 is disposed. In the duct 2050, the cold air circulating fan 2042 and the evaporator 2018 are disposed, and the cold air subjected to heat exchange between the air and the evaporator 2018 circulates through the duct 2050 by the cold air circulating fan 2042. The duct 2050 is formed in this way, whereby the light with which the optical element group 2004 is irradiated or the image information sent after the modulation is not disturbed, but the inside of the duct 2050 has a sealed structure or a semi-sealed structure. Moreover, the air cooled by the heat exchange between the air and the evaporator 2018 and circulating through the duct 2050 can be supplied to the optical element group 2004 to keep the optical element group 2004 at the use temperature.

Moreover, as shown in FIG. 22, the optical path crosses the duct 2050, and a glass or lens through which the light emitted from the light source passes is provided with an attachment allowance region for the duct 2050 or the housing. This attachment allowance region is a portion which does not contribute to the image projected by the emitted light, and heating means is installed in this portion. The heating means is installed in this region, whereby the heating means can effectively perform the heating without blocking the projection image, to prevent dew condensation.

Furthermore, the duct 2050 is provided with electric heaters 2066 for heating the duct 2050 (corresponding to the heating means of the present invention). Moreover, the electric heaters 2066 are attached to the outer surface of the duct 2050. The electric heaters 2066 are, for example, face-like rubber type heaters attached to the upper surface of the duct 2050 and the side surface of the duct 2050, and are energized by a control apparatus 2060 described later to control a heat generation temperature. It is to be noted that two, three or four electric heaters 2066 may be disposed on the duct 2050, or the electric heater may be disposed over the whole surface of the duct 2050. Furthermore, the electric heater 2066 may be a Nichrome (trade name) heater, a carbon heater, a ceramic heater, a strip-like ribbon heater or the like as long as the heater has a face-like (plate) shape.

As shown in FIG. 22, in the duct 2050, a film-like electric heater 2066a is interposed between the glass or lens through which the light emitted from the light source passes and a support attachment portion (a guide) for installing the glass or lens, and the heater is energized by the control apparatus 2060 described later to control the heat generation temperature. It is to be noted that as the electric heater 2066, a linear electric heater 2066b may be installed to be embedded in the portion which does not contribute the projection image, for example, the attachment allowance region for the lens or glass. Moreover, the film-like electric heater 2066a or the linear electric heater 2066b may be installed in the vicinity of the attachment allowance region for the lens or glass, i.e., outside the attachment allowance region so that the light emitted from the light source is not blocked.

On the other hand, as shown in FIG. 21, the liquid crystal projector P includes the control apparatus 2060 (corresponding to control means of the present invention) constituted of a general-purpose microcomputer including a memory or a timer. The control apparatus 2060 is connected to an indoor temperature sensor 2062 and an indoor humidity sensor 2063 for detecting an indoor temperature Tr and an indoor humidity Hr of a portion where the liquid crystal projector P is installed as a usual example of air which comes in contact with the outer surface of the duct 2050 (hereinafter, the indoor temperature and the indoor humidity (the relative humidity) of the portion where the liquid crystal projector P is installed will be referred to simply as the indoor temperature and the indoor humidity) (shown in FIG. 19).

The indoor temperature sensor 2062 and the indoor humidity sensor 2063 are attached to predetermined positions of the main body 2001 (e.g., between the light source 2002 and the optical element group 2004) (shown in FIG. 19). Both the sensors 2062 and 2063 may be disposed outside the duct 2050 in the main body 2001, or sensor portions may be exposed to the outside of the main body 2001, as long as the indoor temperature and the indoor humidity can be detected. In consequence, the sensors are configured to detect the temperature Tr and humidity Hr of a room where the liquid crystal projector P is installed. The indoor temperature sensor 2062 is partitioned by an insulating material so that the sensor is not influenced by the temperature in the main body 2001. It is to be noted that in the embodiment, the indoor temperature sensor 2062 and the indoor humidity sensor 2063 are attached to the side surfaces of the main body 2001 between the light source 2002 and the optical element group 2004, but the attachment positions of the indoor temperature sensor 2062 and the indoor humidity sensor 2063 are not limited to this example. The sensors may be attached to another place, as long as it is possible to detect the temperature and humidity of the room where the liquid crystal projector P is installed.

Moreover, the control apparatus 2060 is connected to an in-duct air temperature sensor 2064 for detecting the temperature of the air circulating through the duct 2050, and a duct surface temperature sensor 2065 for detecting the temperature of the duct 2050 (the temperature of the wall of the duct 2050 in this case). The in-duct air temperature sensor 2064 is disposed inside the duct 2050 (in the duct 2050), and is disposed a predetermined dimension away from the inner surface of the duct 2050. The sensor is attached so that the sensor is not influenced by the temperature of the duct 2050 (the temperature of the surrounding wall of the duct 2050).

The duct surface temperature sensor 2065 is disposed on the outer surface of the duct 2050 so that the sensor comes in close contact with the outer surface of the duct 2050, thereby establishing a relation of heat exchange. Moreover, the control apparatus 2060 is connected to the heating means (the electric heaters 2066), and is also connected to the compressor 2012 and a heat conveyance fan 2067. It is to be noted that the duct surface temperature sensor 2065 is covered with an insulating material so that the sensor is not influenced by the temperature of the air in the main body 2001. Furthermore, the heat conveyance fan 2067 will be described later in another embodiment.

The control apparatus 2060 calculates a dew point Tx (a temperature at which water in the air is condensed) from the indoor temperature Tr and the indoor humidity Hr detected by the indoor temperature sensor 2062 and the indoor humidity sensor 2063. For example, in a case where the dew point Tx calculated from the indoor temperature Tr and the or humidity Hr is +25°C and the temperature of the air circulating through the duct 2050 is +10°C, when a temperature Td of the duct 2050 (the temperature of the wall of the duct 2050) is +25°C or less, dew condensation occurs on the surfaces of the duct 2050 (the inner and outer surfaces of the wall). To solve the problem, the control apparatus 2060 calculates the dew point Tx from the indoor temperature Tr and the indoor humidity Hr, and controls the temperature Td of the duct 2050 so that the temperature becomes higher than this dew point.

That is, when the temperature Td of the duct 2050 detected by the duct surface temperature sensor 2065 as compared with the calculated dew point Tx is, for example, the dew point Tx + 1°C or less (Td ≤ Tx+1), the control apparatus 2060 turns on (energizes) the electric heater 2066 to heat the duct 2050, thereby preventing the dew condensation of the duct 2050. At this time, the outer and inner surfaces of the whole duct 2050 can be heated above the dew point, because the duct 2050 is constituted of a metal plate having a high heat conductivity. In consequence, the dew condensation of the inner and outer surfaces of the duct 2050 can be prevented remarkably quickly and efficiently.

Moreover, when the temperature Td of the duct 2050 detected by the duct surface temperature sensor 2065 rises to, for example, the dew point Tx + 3°C or more (Td ≥ Tx*3), the control apparatus 2060 turns off (de-energizes) the electric heater 2066. It is to be noted that the control apparatus 2060 controls the operation of the cooling apparatus 2010 so as to obtain the above set temperature, based on the temperature of the air in the cooling air path 2052 detected by the in-duct air temperature sensor 2064. However, a technology for controlling the operation of the cooling apparatus 2010 by the control apparatus 2060 is heretofore well known technology, and hence detailed description thereof is omitted. Hereinafter, in the embodiments, the control apparatus 2060 performs the control in the same manner as described above (the control of the dew points of the cooling apparatus 2010 and the duct 2050 and the control of the temperature of the cold air circulating through the duct 2050), and the detailed description of the control is omitted.

A cooling operation using the cooling apparatus 2010 having the above constitution will be described. When the compressor 2012 is driven, the low-temperature low-pressure refrigerant is sucked into a compression element (not shown) through the refrigerant introduction pipe 2011 and compressed in the compressor. The compressed refrigerant having a high temperature and a high pressure is discharged through the refrigerant discharge tube 2013 to flow into the radiator 2014. The refrigerant which has flowed into the radiator 2014 releases the heat therein by heat exchange between the refrigerant and the outside air which has flowed in the radiator through an air hole 2035. The refrigerant which has released the heat by the radiator 2014 enters the capillary tube 2016 through a refrigerant pipe 2015, and passes through the capillary tube 2016. In this process, the pressure of the refrigerant is decreased, and the refrigerant having this low-temperature low-pressure state flows into the evaporator 2018.

The refrigerant which has flowed into the evaporator 2018 takes the heat from the air circulating through the duct 2050 to evaporate by the cold air circulating fan 2042. On the other hand, the air cooled by taking the heat thereof by the refrigerant in the evaporator 2018 (the cold air having a temperature lower than the indoor temperature) is circulated through the duct 2050 by the cold air circulating fan 2042. In consequence, the optical element group 2004 releases the heat to the air circulating through the duct 2050 (the set temperature is +10°C as described above), and is cooled. It is to be noted that the refrigerant which has received the heat from the optical element group 2004 in the duct 2050 by the evaporator 2018 is sucked into the compressor 2012 through the refrigerant introduction pipe 2011, is compressed by the compressor to flow into the radiator 2014, and releases the heat to the outside air supplied by the radiator 2014, thereby repeating this cycle.

Thus, the liquid crystal projector P includes the evaporator 2018 (the cooling means) disposed in the main body 2001 (in the duct 2050); the duct 2050 which supplies the cold air cooled by the evaporator 2018 to the optical element group 2004 to cool the group; and the electric heater 2066 (the heating means) which heats the duct 2050. Moreover, the projector includes the control apparatus 2060 which supplies, to the optical element group 2004 through the duct 2050, the cold air cooled by the evaporator 2018 below the temperature in the room where the liquid crystal projector P is installed and which sets the temperatures of the inner and outer surfaces of the duct 2050 above the dew point by the electric heater 2066. In consequence, while cooling the optical element group 2004, the inner and outer surfaces of the duct 2050 are heated by the electric heater 2066 to prevent the occurrence of dew condensation.

In consequence, dew (water) condensed on the inner surface of the duct 2050 can be prevented from disadvantageously flying, scattering and causing damage to the optical element group 2004. Moreover, it is also possible to prevent a disadvantage that mold and bacteria proliferate on the inner and outer surfaces of the optical element group 2004 and duct 2050 owing to the dew condensation. Therefore, the inner and outer surfaces of the optical element group 2004 and the duct 2050 can constantly be maintained in a clean state where there is not any dew condensation, mold or bacteria, and the quality enhancement or maintenance cost reduction of the optical element group 2004 can be achieved.

Moreover, since the inner and outer surfaces of the duct 2050 can be heated by the electric heater 2066 to prevent the dew condensation, as described above, the duct 2050 having high insulating properties and a large thickness does not have to be used for insulation, and the degree of freedom in spatial layout design can be increased.

Furthermore, since the duct 2050 is constituted of the metal plate, the heat conductivity of the duct 2050 can noticeably be increased, and even the electric heater 2066 having an area smaller than the area of the whole duct 2050 can effectively heat the whole duct 2050. In consequence, the outer and inner surfaces of the whole duct 2050 can uniformly be heated above the dew point, and the dew condensation of the duct 2050 can effectively be prevented.

In addition, since the heating means is constituted of the electric heater 2066, the heating means can be provided with a simple constitution. In particular, when the heating means is constituted of the electric heater 2066, wiring can be disposed outside, and hence the seal properties of the duct 2050 can be improved. Moreover, assembly operation properties can be improved, and the temperature can easily be controlled.

### Embodiment 6

Next, FIG. 23 is a vertical side view (an exemplary diagram) of a duct 2050 constituting a liquid crystal projector P showing another embodiment of the present invention. The liquid crystal projector P has substantially the same constitution as the above embodiment. Hereinafter, a different part will be described. It is to be noted that the same part as the above embodiment is denoted with the same reference numerals, and the description thereof is omitted.

That is, in the duct 2050, a Peltier element 2068 (corresponding to heating means of the present invention) is disposed as an assistance of a cooling apparatus 2010 which cools cold air circulating through the duct 2050. The Peltier element 2068 is a semiconductor element having such a Peltier effect that when a current is passed through a joint between two types of metals, heat moves from one of the metals to the other metal, and the element is interposed between the evaporator 2018 and the optical element group 2004. One metal plate 2068A is disposed on the heat absorption side of the Peltier element 2068, and another metal plate 2068B is disposed on the heat release side of the element. The other metal plate 2068B is attached to abut on the inner surface of the duct 2050, whereby the heat absorbed by the one metal plate 2068A can be released through the other metal plate 2068B to heat the duct 2050.

A heat absorption plate 2070 is fixed to the one metal plate 2068A of the Peltier element 2068, and the heat absorption plate 2070 is constituted of a base plate 2070A fixed to the one metal plate 2068A and having a plate shape, and a plurality of heat absorption fins 2070B vertically disposed on the base plate 2070A with predetermined spaces among them. In this case, the Peltier element 2068 (the one metal plate 2068A) is coated with a grease having a high heat conductivity, and the one metal plate 2068A is fixed to the heat absorption plate 2070 (the base plate 2070A) in a relation of heat exchange.

Moreover, while the other metal plate 2068B is fixed to the inner surface of the duct 2050, the plurality of heat absorption fins 2070B extend to the vicinity of the inner surface of the duct 2050 facing the inner surface of the duct 2050 to which the other metal plate 2068B is fixed. It is to be noted that FIG. 23 shows the uppermost heat absorption fin 2070B of the plurality of heat absorption fins 2070B stacked with the predetermined spaces among them. The air circulating through the duct 2050 passes among the heat absorption fins 2070B in a direction of a dotted arrow. Moreover, the heat absorption plate 2070 does not have to be disposed on the heat absorption side of the Peltier element 2068 (the one metal plate 2068A), but the one metal plate 2068A may be exposed in the duct 2050. In this case, the heat absorption plate 2070 is not required, which can prevent cost increase.

Furthermore, the above control apparatus 2060 controls a current to be passed through a joint between the one metal plate 2068A and the other metal plate 2068B of the Peltier element 2068. In consequence, the air circulating through the duct 2050 is cooled, and as described above, the heat absorption and heat release of the Peltier element 2068 are controlled so that the temperatures of the inner and outer surfaces of the duct 2050 are not lower than the dew point.

In addition, when the compressor 2012 is compressed as described above, the low-temperature low-pressure refrigerant is sucked into a compression element (not shown) through a refrigerant introduction pipe 2011 and compressed in the compressor. The compressed refrigerant having a high temperature and a high pressure is discharged through a refrigerant discharge tube 2013 to flow into a radiator 2014, and releases the heat thereto by heat exchange between the refrigerant and the outside air which has flowed in the radiator through an air hole 2035. The refrigerant which has released the heat by the radiator 2014 enters a capillary tube 2016 through a refrigerant pipe 2015 and passes through the tube. In this process, the pressure of the refrigerant is decreased, and the refrigerant flows into an evaporator 2018. The refrigerant which has flowed into the evaporator 2018 takes the heat from the air circulating through the duct 2050 to evaporate.

On the other hand, when the air cooled by taking the heat thereof by the refrigerant in the evaporator 2018 (the cold air) is circulated through the duct 2050 by a cold air circulating fan 2042, the heat is absorbed by the heat absorption plate 2070 (the plurality of heat absorption fins 2070B) fixed to the Peltier element 2068 (the one metal plate 2068A) in the relation of heat exchange, to further cool the air of the duct 2050. Moreover, the heat taken from the air circulating through the duct 2050 by the heat absorption plate 2070 is conducted to the Peltier element 2068 (the one metal plate 2068A), and is discharged through the other metal plate 2068B to heat the duct 2050, thereby preventing the dew condensation.

Moreover, the air further cooled by taking the heat thereof by the Peltier element 2068 in the duct 2050 is supplied to the optical element group 2004, and the optical element group 2004 releases the heat to such cooled air, and is cooled. That is, in the Peltier element 2068, the cold air circulating through the duct 2050 can further be cooled by the one metal plate 2068A and the duct 2050 can be heated by the other metal plate 2068B, to effectively prevent both the temperature rise of the optical element group 2004 and the dew condensation of the duct 2050.

In this way, the heating means is constituted of the Peltier element 2068, whereby the other metal plate 2068B of the Peltier element 2068 can heat the duct 2050, and the Peltier element 2068 on the heat absorption side (the one metal plate 2068A) can further cool the cold air circulating through the duct 2050 by the cold air circulating fan 2042. Therefore, the inner and outer surfaces of the duct 2050 are heated by the Peltier element 2068 on the heat release side (the other metal plate 2068B) to prevent the dew condensation, whereas the heat can be absorbed on the heat absorption side (the one metal plate 2068A) to cool the air circulating through the duct 2050, thereby preventing the temperature rise of the optical element group 2004.

In particular, the cold air can be cooled by the Peltier element 2068, whereby the operation ratio of the cooling apparatus 2010 can be lowered, and noise generated from the cooling apparatus 2010 can be decreased. That is, since the Peltier element 2068 can effectively perform both the heating of the duct 2050 and the cooling of the cold air circulating through the duct 2050, power consumption can remarkably be decreased.

### Embodiment 7

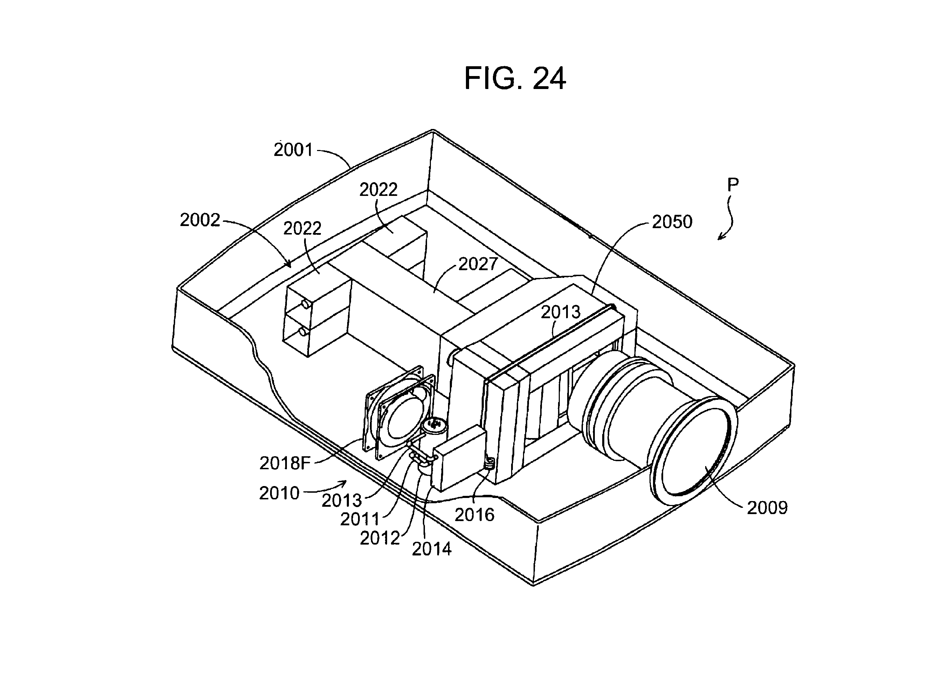

Next, FIG. 24 is a perspective view of a liquid crystal projector P showing still another embodiment of the present invention. The liquid crystal projector P has substantially the same constitution as the above embodiment. Hereinafter, a different part will be described. It is to be noted that the same part as the above embodiment is denoted with the same reference numerals, and the description thereof is omitted. In this case, a refrigerant discharge tube 2013 connected to the outlet side of a compressor 2012 and a radiator 2014 are arranged so as to have a relation of heat exchange between them and a duct 2050 (the outer surface), so that the duct 2050 can be heated by the heat of the radiator 2014.

That is, the refrigerant discharge tube 2013 connected to the outlet side of the compressor 2012 is disposed to come in close contact with the periphery of the duct 2050 in the relation of heat exchange, and then connected to the radiator 2014. Moreover, the radiator 2014 is installed on the side surface of the duct 2050 (on the left side of the duct 2050 in the diagram), and is disposed on a high temperature side (the radiator 2014) of a refrigerant circuit constituting a cooling apparatus 2010 (corresponding to a refrigerant conveyance circuit of heat conveyance means of the present invention). In consequence, a high-temperature refrigerant discharged from the compressor 2012 can heat the duct 2050, and the radiator 2014 can further heat the duct 2050. Therefore, the heat of the radiator 2014, which has heretofore been wasted outside a main body 2001, can be utilized to efficiently heat the duct 2050, and hence dew condensation on the inner and outer surfaces of the duct 2050 can be prevented.

### Embodiment 8

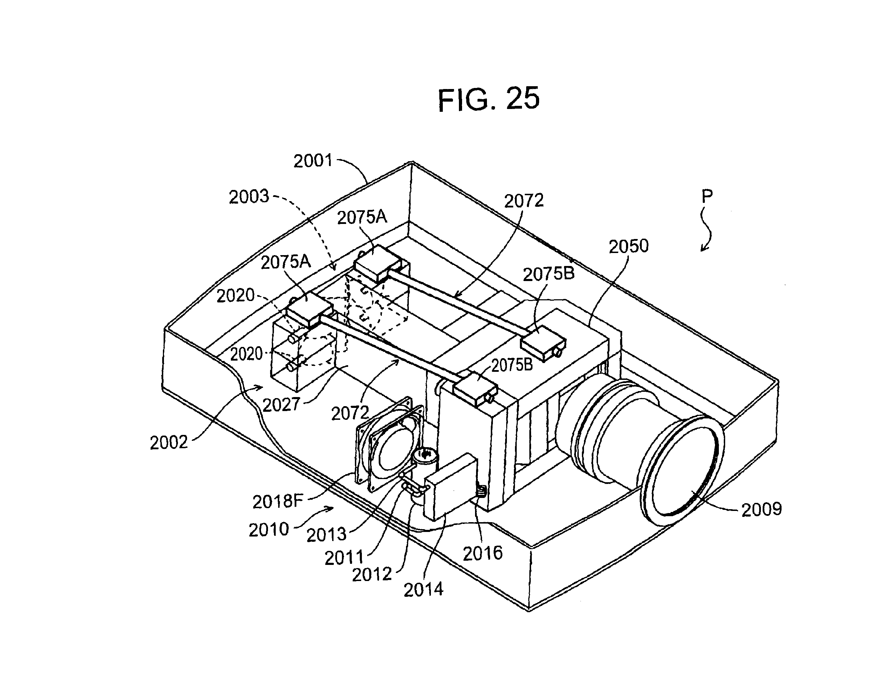

Next, FIG. 25 is a perspective view of a liquid crystal projector P of a further embodiment of the present invention. The liquid crystal projector P has substantially the same constitution as the above embodiment. Hereinafter, a different part will be described. It is to be noted that the same part as the above embodiment is denoted with the same reference numerals, and the description thereof is omitted. That is, the liquid crystal projector P is provided with a heat pipe 2072 which conveys the heat of a light source 2002 to a duct 2050 (corresponding to heat conveyance means of the present invention). That is, the heat conveyance means is constituted of the heat pipe 2072 extending from the upper surface of the light source 2002 to the upper surface of the duct 2050, heat absorption members 2075A disposed on the light source 2002 side of the heat pipe 2072, and heat absorption members 2075B disposed on the duct 2050 side of the heat pipe 2072.

The heat pipe 2072 (the heat pipe 2072 and the heat absorption members 2075A and 2075B) is made of a metal such as copper having a high heat conductivity, and the refrigerant and a wick for conveying the liquefied refrigerant are included in the pipe. The heat absorption members 2075A have a plate shape having a predetermined thickness, and are fixed to the upper surface of the lamp box 2022 in which the light source 2002 is received in the relation of heat exchange. Moreover, the heat absorption members 2075B also have a plate shape having a predetermined thickness, and are fixed to the upper surface of the duct 2050 in the relation of heat exchange. Moreover, the heat pipes 2072 on one side are fixed to the heat absorption members 2075A and the heat pipes on the other side are fixed to the heat absorption members 2075B in the relation of heat exchange. In consequence, the heat generated by the light source 2002 is absorbed by the heat absorption members 2075A, and conveyed to the heat absorption members 2075B through the heat pipes 2072. The heat conveyed to the heat absorption members 2075B is released to the duct 2050 to heat the duct 2050. That is, the heat pipe 2072 efficiently conveys the heat generated from the light source 2002 to heat the duct 2050, thereby preventing the duct 2050 from causing dew condensation.

Thus, since the heat conveyance means is constituted of the heat pipe 2072, the duct 2050 can be heated by the heat of the light source 2002, and the duct 2050 can effectively be prevented from causing the dew condensation. In consequence, the cooling apparatus 2010 can perform both the heating of the inner and outer surfaces of the duct 2050 and the cooling of the cold air circulating through the duct 2050, which can noticeably improve the convenience of the liquid crystal projector P. Especially, the refrigerant circuit of the cooling apparatus 2010 is constituted separately form the heat pipe 2072, and hence the heat conveyance ability of the heat pipe 2072 is first designed, whereby control does not have to be executed. Therefore, devices disposed in the duct can easily be disassembled or assembled, which can remarkably improve operation properties. It is to be noted that in Embodiment 8, the heat pipe 2072 is used as the heat conveyance means for conveying the heat of the light source 2002 to the duct 2050, but a metal member or a refrigerant conveyance circuit of water, air or the like may be used as the heat conveyance means in place of the heat pipe 72, to convey the heat of the light source 2002 to the duct 2050.

### Embodiment 9

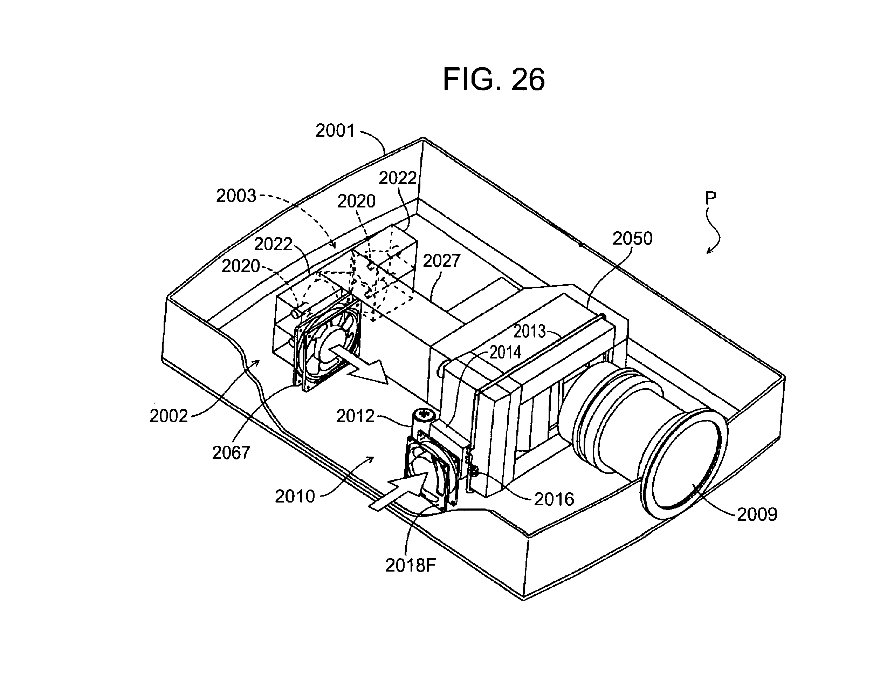

Next, FIG. 26 is a perspective view of a liquid crystal projector P of a further embodiment of the present invention. The liquid crystal projector P has substantially the same constitution as the above embodiment. Hereinafter, a different part will be described. It is to be noted that the same part as the above embodiment is denoted with the same reference numerals, and the description thereof is omitted. That is, in the liquid crystal projector P, the above heat conveyance fan 2067 is disposed on the optical element group 2004 side of a lamp box 2022. Moreover, the heat conveyance fan 2067 is configured to blow heat generated from a light source 2002 in a duct 2050 direction as shown by a white arrow in the diagram, to heat the duct 2050, thereby preventing the duct 2050 from causing dew condensation.

A radiator 2014 constituting a cooling apparatus 2010 is disposed on the outer surface of the duct 2050 (on the left side of the duct 2050 in the diagram). Moreover, a heat release fan 2018F is disposed beside the radiator 2014, and is disposed at such a position as to blow the heat released from the radiator 2014 in the direction of the wall surface of the duct 2050. Moreover, the radiator 2014 is disposed as much as a predetermined dimension away from the duct 2050 so that the air blown between the radiator 2014 and the duct 2050 by the heat release fan 2018F can circulate through a main body 2001. In consequence, as shown by the white arrow in the diagram, the air blown by the heat release fan 2018F is configured to blow the heat of the radiator 2014 in the duct 2050 direction to heat the duct 2050, thereby preventing the duct 2050 from causing the dew condensation.

Moreover, a control apparatus 2060 calculates a dew point from indoor temperature and humidity detected by an indoor temperature sensor 2062 and an indoor humidity sensor 2063. When the temperature of the duct 2050 detected by a duct surface temperature sensor 2065 lowers and comes close to the dew point (a temperature which is +1°C to +2°C higher than the dew point), the control apparatus 2060 turns on the heat conveyance fan 2067 to blow the heat generated from the light source 2002 in the duct 2050 direction. In consequence, the duct 2050 is heated to prevent the duct 2050 from reaching the dew point and causing the dew condensation. Moreover, when the temperature of the duct 2050 is higher than the dew point, the control apparatus turns off the heat conveyance fan 2067 to stop the blowing to the duct 2050. It is to be noted that the heat release fan 2018F is controlled to turn on/off by the operation of the cooling apparatus 2010 irrespective of the dew point of the duct 2050.

In this way, heat generation devices disposed in the main body 2001 (the light source 2002 and the radiator 2014) are used as heating means, and the air heated by the heat generation devices can be blown to the outer surface of the duct 2050 by the fans 2018F and 67, to heat the duct 2050, whereby hot air can be produced by the heat of heat generation devices such as the light source 2002 and the radiator 2014, thereby heating the duct 2050. In consequence, a special heat source for heating the duct 2050 is not necessary, and the heat of the heat generation devices can effectively be utilized. Moreover, energy for heating the duct 2050 to prevent the dew condensation of the duct 2050 can be saved. Therefore, the dew condensation of the inner and outer surfaces of the duct 2050 can be prevented at a low cost.

### Embodiment 10

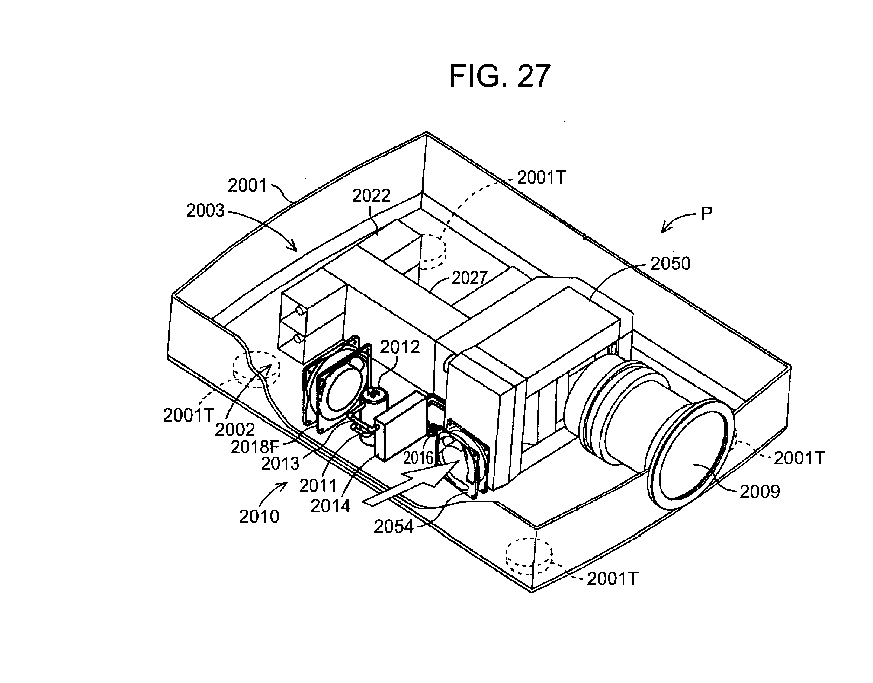

Next, FIG. 27 is a perspective view of a liquid crystal projector P of a further embodiment of the present invention. The liquid crystal projector P has substantially the same constitution as the above embodiment. Hereinafter, a different part will be described. It is to be noted that the same part as the above embodiment is denoted with the same reference numerals, and the description thereof is omitted. That is, Embodiment 10 has a constitution in which indoor air taken from the outside of the projector P (the outside of a main body 2001) constitutes heating means, and this heating means (the indoor air) heats a duct 2050.

Moreover, in Embodiment 5 described above, the electric heater 2066 is used as the heating means to heat the duct 2050 above the dew point, in Embodiment 6, the heat release side of the Peltier element 2068 is used as the heating means to heat the duct 2050 above the dew point, and in Embodiment 7, the refrigerant discharge tube 2013 and the radiator 2014 connected to the outlet side of the compressor 2012 are used as the heating means to heat the 2050 above the dew point, thereby preventing the dew condensation of the inner and outer surfaces of the duct 2050. Moreover, in Embodiment 8 described above, the heat of the light source 2002 is used as the heating means, and is conveyed to the duct 2050 by the heat pipe 2072, whereby the duct 2050 is heated above the dew point by the heat, and in Embodiment 9, the heat of the light source 2002 is used as the heating means to heat the duct 2050 above the dew point via the heat conveyance fan 2067, and the radiator 2014 is used as the heating means to heat the duct 2050 above the dew point via the heat release fan 2018F, thereby preventing the dew condensation of the inner and outer surfaces of the duct 2050. In Embodiment 10, in place of the electric heater 2066 of Embodiment 5, a fan 2054 is disposed to take air outside the main body 2001 (the air in a room where the projector P is installed) into the main body 2001, thereby blowing the air onto the outer surface of the duct 2050. When the air outside the main body 2001 is taken inwardly, the air preferably has a high temperature and a low humidity.

The fan 2054 is disposed on the side surface of the duct 2050 (on the left side of the duct 2050 in the diagram), and the side surface of the main body 2001 facing the duct 2050 is provided with an air intake port (not shown). Moreover, as shown by a white arrow in the diagram, the indoor air is taken into the main body 2001 through the air intake port formed in the side surface of the main body 2001, and is blown onto the outer surface of the duct 2050 by the fan 2054. In consequence, since the duct 2050 can be heated above the dew point, the dew condensation of the inner and outer surfaces of the duct 2050 can be prevented.

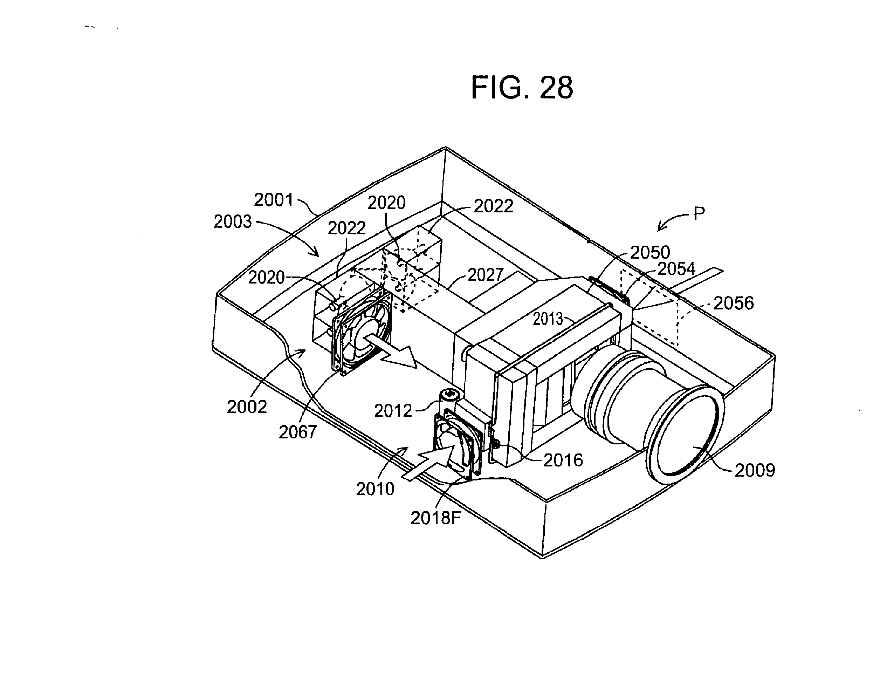

Furthermore, as shown in FIG. 28, the fan 2054 may be disposed on the side surface of the duct 2050 (on the right side of the duct 2050 in the diagram). That is, in FIG. 25 (Embodiment 9), since the heat release fan 2018F is disposed on the left side of the duct 2050, the fan 2054 cannot be disposed on the side. To solve the problem, the fan 2054 is disposed on the right side of the duct 2050, and an air intake port 2056 is disposed in the side surface of the main body 2001 facing the fan 2054. Moreover, also in this case, as shown by a white arrow in the diagram, the indoor air is taken into the main body 2001 through the air intake port 2056 in the side surface of the main body 2001, and is blown onto the outer surface of the duct 2050 by the fan 2054. In consequence, since the duct 2050 can be heated above the dew point, the dew condensation of the inner and outer surfaces of the duct 2050 can be prevented.

It is to be noted that in Embodiment 10, needless to say, the temperature of the indoor air (the air outside the projector P) is lower than that of the heating means of Embodiments 5 to 9, and hence the fan 2054 capable of obtaining a large airflow is used.

In this way, since the indoor air is used as the heating means to heat the duct 2050 by the indoor air taken from the outside of the projector P (the outside of the main body 2001), any special heat source does not have to be used, but the duct 2050 can be heated above the dew point. In consequence, any special heat source is not necessary, and heating energy can be saved. Therefore, the dew condensation preventing cost for the duct 2050 can remarkably be decreased.

It is to be noted that the material of the duct 2050 of the Embodiments 5 to 10 is usually the metal material, but the metal material does not necessarily have to be used. For example, an insulating material may be used. In Embodiments 5 to 8, solid heating means comes in contact with a part of the solid duct 2050 to heat the part (the contact area of the heating means is small). To obtain a uniform duct temperature distribution and eliminate a portion locally having a low temperature, a metal material having an excellent heat conductivity is preferably used.

However, in Embodiments 9 and 10, the whole solid duct 2050 is uniformly heated by a gas such as air (the contact area of the heating means is large), and a temperature distribution is not comparatively easily obtained by this heating method. Therefore, as the material of the duct 2050, there may be used hard polyvinyl chloride having a heat conductivity which is not high; a resin-based material such as a silicon resin, a fluorine resin, a phenol resin, a polycarbonate resin or a polystyrene resin; a rubber/plastic-based material; a glass-based material; a fiber-based material or the like.

It is to be noted that the embodiments have been described by using the liquid crystal projector P as one example of the projector, but the projector of the present invention is not limited to the liquid crystal projector P. Any projector may be used as long as the projector is constituted of the light source 2002 and the projection lens 2009 which projects the processed projection light image onto the screen. The present invention is effectively applied to, for example, a DLP projector (DLP (registered trademark)). Moreover, the respective embodiments of the present invention are also effectively applied to a laser scan projector in which an optical element group is irradiated with light emitted from a solid light source such as a laser light source, and the light is processed, thereby emitting image light.

## Claims

1. A projector provided with a light source disposed in a main body, and an optical element group which processes light emitted from this light source in accordance with an image signal to emit the image light, comprising:
cooling means disposed in the main body;
a sealed or substantially sealed duct through which cold air cooled by the cooling means is circulated and supplied to the optical element group to cool the optical element group;
ventilation means for introducing outside air into this duct to discharge the air from the duct; and
control means for controlling this ventilation means to execute a ventilating operation in the duct.

2. The projector according to claim 1, wherein the ventilation means comprises an outside air introduction port and an air discharge port formed in the duct, and dampers which open and close the outside air introduction port and the air discharge port, respectively, the control means opens the outside air introduction port and the air discharge port by the dampers to execute the ventilating operation, and
the cooling means is disposed in the duct between the outside air introduction port and the air discharge port.

3. The projector according to claim 2, wherein when the dampers open the outside air introduction port and the air discharge port, the outside air introduction port and the air discharge port are isolated from the optical element group.

4. The projector according to any one of claims 1 to 3, further comprising: a desiccant disposed in the duct; and a desiccant heating heater which heats this desiccant,
wherein the control means allows the desiccant heating heater to generate heat, when the ventilation means executes the ventilating operation.

5. The projector according to any one of claims 1 to 4, wherein when the cooling operation of the cooling means is stopped and the temperature of the cooling means rises above the dew point of the outside air, the control means executes the ventilating operation by the ventilation means.

6. A projector provided with a light source, optical elements irradiated with light emitted from the light source and an optical projection system which projects the light emitted from the optical elements, comprising:
a cooling apparatus including an air flow path which is the flow path of air, and a cooling section which cools the air flowing through the air flow path; and
a light quantity control section which controls the quantity of the light with which the optical elements are irradiated,
wherein the optical elements are disposed in the air flow path,
the quantity of the light with which the optical elements are irradiated is set to a predetermined light quantity in a usual operation state,
thee cooling section starts cooling the air flowing through the air flow path, when receiving an operation start instruction which instructs the operation start of the self apparatus, and
when receiving the operation start instruction, the light quantity control section controls the light quantity so that the optical elements are irradiated with the light having a light quantity smaller than the predetermined light quantity.

7. The projector according to claim 6, wherein even when receiving the operation start instruction, the light quantity control section controls the light quantity so that the optical elements are not irradiated with the light.

8. The projector according to claim 6, wherein the light source is constituted of a plurality of light sources, and
when receiving the operation start instruction, the light quantity control section controls the light quantity so that the optical elements are irradiated only with the light emitted from the light sources of one part of the plurality of light sources.

9. The projector according to claim 6, wherein the light source is constituted of a plurality of light sources,
when receiving the operation start instruction, the light quantity control section controls the light quantity so that the optical elements are irradiated with the light emitted from the light sources of the one part of the plurality of light sources temporally behind the light emitted from the light sources of the other part, and
the light sources of the one part and the light sources of the other part are geometrically symmetric.

10. The projector according to claim 6, wherein the light quantity control section controls a power to be supplied to the light sources to control the quantity of the light with which the optical elements are irradiated.

11. The projector according to claim 6, further comprising: a light quantity limiting section interposed between the light source and the optical elements and constituted of a light blocking member,
wherein the light quantity control section controls the light quantity limiting section to control the quantity of the light with which the optical elements are irradiated.

12. The projector according to claim 6, wherein
the light quantity control section controls the light quantity so that the optical elements are irradiated with the light having a quantity smaller than the predetermined light quantity from when the operation start instruction is received until a predetermined time elapses.

13. The projector according to claim 6, wherein the cooling apparatus includes a temperature sensor which detects a temperature in the air flow path, and
the light quantity control section controls the light quantity so that the optical elements are irradiated with the light having a light quantity smaller than the predetermined light quantity from when the operation start instruction is received until the temperature detected by the temperature sensor is below a predetermined temperature.

14. The projector according to claim 6, wherein the cooling apparatus includes a temperature sensor which detects the temperature of the cooling section, and
the light quantity control section controls the light quantity so that the optical elements are irradiated with the light having a light quantity smaller than the predetermined light quantity from when the operation start instruction is received until the temperature detected by the temperature sensor lowers below a predetermined temperature.

15. The projector according to claim 6, further comprising: an optical element control section which controls the optical elements,
wherein the optical elements are a pair of polarizing plates and a liquid crystal panel sandwiched
between the pair of polarizing plates, and
when receiving the operation start instruction, the optical element control section controls the liquid crystal panel so that the light emitted from the light source is transmitted through the pair of polarizing plates.

16. A projector provided with a light source disposed in a main body and an optical element group which processes light emitted from the light source in accordance with an image signal to emit the image light, comprising:
a refrigerant circuit in which a compressor, a radiator, a pressure reducing unit and an evaporator are connected to one another via piping so that a refrigerant circulates through the compressor, the radiator, the pressure reducing unit and the evaporator in this order;
an air circulation duct through which blowing means forms an air path so that air cooled by the evaporator circulates through the optical element group again to the evaporator; and
heating means for heating the air circulation duct,
wherein the heating means sets the temperature of the outer surface of the air circulation duct above the dew point of air outside the air circulation duct.

17. The projector according to claim 16, wherein the high temperature side of the refrigerant circuit and heat conveyance means for conveying the heat on the high temperature side to the air circulation duct constitute the heating means to heat the air circulation duct.

18. The projector according to claim 16, wherein the light source and heat conveyance means for conveying the heat of the light source to the air circulation duct constitute the heating means to heat the air circulation duct.

19. The projector according to claim 16, wherein the heating means is a Peltier element, the air circulation duct is heated on the heat release side of the Peltier element, and the air in the air circulation duct is cooled on the heat absorption side of the Peltier element.

20. The projector according to claim 16, wherein the light source and/or the radiator constitute the heating means, and the air heated by the heating means is brought into contact with the outer surface of the air circulation duct to heat the outer surface thereof.

21. The projector according to claim 16, wherein the heating means is indoor air, and the indoor air (the outside air) taken from the outside of the projector is brought into contact with the outer surface of the air circulation duct to heat the outer surface thereof.

22. A projector provided with a light source disposed in a main body and an optical element group which processes light emitted from the light source in accordance with an image signal to emit the image light, comprising:
a refrigerant circuit in which a compressor, a radiator, a pressure reducing unit and an evaporator are connected to one another via piping so that a refrigerant circulates through the compressor, the radiator, the pressure reducing unit and the evaporator in this order; and
an air circulation duct through which blowing means forms an air path so that air cooled by the evaporator circulates through the optical element group again to the evaporator,
wherein a part of the air circulation duct is provided with a light transmitting member through which the
light emitted from the light source passes, and heating means is disposed in an attachment allowance region where the light transmitting member is attached to the air circulation duct or in the vicinity of the attachment allowance region, to set the temperature of the outer surface of the transmitting member above the dew point of the air along the outer surface of the transmitting member.
